# EUROPEAN PATENT APPLICATION

(11) **EP 4 221 324 A1**
(43) Date of publication of application: **02.08.2023**
(21) Application number: 20958261.8
(22) Date of filing: 22.10.2020
(51) Int. Cl.: H04W 36/00

(54) **COMMUNICATION METHOD AND RELATED DEVICE**

(71) Applicant: Huawei Technologies Co., Ltd., Shenzhen, Guangdong 518129 (CN)
(72) Inventor: LIU, Jing, Shenzhen, Guangdong 518129 (CN); ZHU, Yuanping, Shenzhen, Guangdong 518129 (CN); SHI, Yulong, Shenzhen, Guangdong 518129 (CN)
(74) Representative: Pfenning, Meinig & Partner mbB
(86) International application number: PCT/CN2020/123008
(87) International publication number: WO 2022/082679

(57) **Abstract**

Embodiments of this application provide a communication method and a related device. The method includes: A first IAB-donor-CU determines a QoS attribute corresponding to an F1 application protocol (F1 application protocol, FlAP) message, where an F1 interface is a communication interface between the first IAB-donor-CU and a DU of an IAB-node. Then, the first IAB-donor-CU sends the FlAP message and the QoS attribute corresponding to the FlAP message to a second IAB-donor-DU. In the method, transmission of the FlAP message can be ensured even when a first IAB-donor-DU cannot forward the FlAP message from the first IAB-donor-CU.

## Description

### TECHNICAL FIELD

This application relates to the field of communication technologies, and more specifically, to a communication method and a related device.

### BACKGROUND

An integrated access and backhaul (integrated access and backhaul, IAB) technology is an important part of a fifth generation (5G) mobile communication technology.

In an aspect, because a distributed unit (Distributed Unit, DU) of an IAB-node is connected to an IAB-donor-central unit (Central Unit, CU) in a wireless manner, the IAB-node may choose to migrate between different IAB-donors. To reduce impact on data transmission of a child node in an IAB-node migration process, the IAB-node generally needs to obtain configuration information of the IAB-node under a target IAB-donor in advance, to establish (or re-establish) an F 1 connection between the IAB-node and the target IAB-donor. For example, a target IAB-donor-CU first transfers the configuration information of the IAB-node under the target IAB-donor to a source IAB-donor-CU, and then the source IAB-donor-CU transfers the configuration information to the IAB-node. Because this process needs to use the source IAB-donor-CU, a transmission delay of the configuration information is high.

In another aspect, in a multi-connectivity or dual-connectivity scenario, to be specific, when an IAB-node is connected to both a first IAB-donor and a second IAB-donor, if a first IAB-donor-DU cannot forward data sent by a first IAB-donor-CU, data transmission and sending between the first IAB-donor and the IAB-node are interrupted. This affects user experience.

### SUMMARY

In view of this, this application provides a communication method and a related device, to reduce a data transmission delay and data transmission interruption.

According to a first aspect, this application provides a communication method. The method may include: A first IAB-donor-CU determines a quality of service QoS attribute corresponding to an F 1 application protocol (F 1 application protocol, F 1AP) message or a quality of service (quality of service, QoS) attribute corresponding to user plane data. An F1 interface is a communication interface between the first IAB-donor-CU and a distributed unit DU of an IAB-node. Then, the first IAB-donor-CU sends the F1AP message and the QoS attribute corresponding to the FlAP message to a second IAB-donor-DU, or sends the user plane data and the QoS attribute corresponding to the user plane data to a second IAB-donor-DU.

In this method, for example, beneficial effects are as follows. The second IAB-donor-DU may be enabled to forward the FlAP message or the user plane data from the first IAB-donor-CU. In an aspect, data transmission interruption caused because a first IAB-donor-DU cannot forward the FlAP message or the user plane data from the first IAB-donor-CU can be reduced. In another aspect, a link between the first IAB-donor-CU and the second IAB-donor-DU is used without passing through a second IAB-donor-CU. Therefore, a data transmission delay is reduced.

In a possible design, the first IAB-donor-CU may determine, based on a correspondence between an FlAP message type and the QoS attribute, the QoS attribute corresponding to the FlAP message. Alternatively, the first IAB-donor-CU may determine, based on a correspondence between the user plane data and the QoS attribute, the QoS attribute corresponding to the user plane data.

The correspondence is obtained from the second IAB-donor-CU.

In this design, for example, a beneficial effect is as follows. The second IAB-donor-DU can correctly perform routing and/or bearer mapping on the FlAP message or the user plane data from the first IAB-donor-CU based on a correspondence that is between the QoS attribute and a route configuration and that is configured by the second IAB-donor-CU for the second IAB-donor-DU, and/or a correspondence that is between the QoS attribute and a bearer configuration and that is configured by the second IAB-donor-CU for the second IAB-donor-DU.

In a possible design, the method includes: The first IAB-donor-CU sends an FlAP message type indication and the QoS attribute to a second IAB-donor-CU, where there is a correspondence between the FlAP message type indication and the QoS attribute. Alternatively, the first IAB-donor-CU sends a user plane data indication and the QoS attribute to a second IAB-donor-CU, where there is a correspondence between the user plane data indication and the QoS attribute.

In this design, for example, beneficial effects are as follows. The second IAB-donor-CU may resend a correspondence between the QoS attribute and the route configuration and/or a correspondence between the QoS attribute and the bearer configuration to the second IAB-donor-DU based on the received correspondence between the FlAP message type indication and the QoS attribute or the received correspondence between the user plane data indication and the QoS attribute, so that the second IAB-donor-DU performs, based on the new correspondence between the QoS attribute and the route configuration and/or the new correspondence between the QoS attribute and the bearer configuration, routing and/or bearer mapping on the FlAP message or the user plane data from the first IAB-donor-CU.

In a possible design, the method includes: The first IAB-donor-CU sends the F1AP message or the user plane data to the IAB-node through a first transport network layer association (transport network layer association, TNLA) between the first IAB-donor-CU and the DU of the IAB-node, where the first TNLA corresponds to an internet protocol (internet protocol, IP) address allocated by the first IAB-donor to the IAB-node. Alternatively, the first IAB-donor-CU sends the F1AP message or the user plane data to the IAB-node through a second TNLA between the first IAB-donor-CU and the DU of the IAB-node, where the second TNLA corresponds to an IP address allocated by the second IAB-donor to the IAB-node.

In this design, for example, a beneficial effect is as follows. The FlAP message or the user plane data generated by the first IAB-donor-CU may be sent to the IAB-node by using the second IAB-donor-DU and through the TNLA between the first IAB-donor-CU and the IAB-DU.

In a possible design, the method includes: The first IAB-donor-CU receives the IP address that is from the second IAB-donor-CU and that is allocated by the second IAB-donor to the IAB-node. That the first IAB-donor-CU sends the FlAP message or the user plane data to the IAB-node through a second transport network layer association TNLA between the first IAB-donor-CU and the DU of the IAB-node includes: The first IAB-donor-CU sends the F1AP message or the user plane data to the IAB-node through the second TNLA by using the IP address allocated by the second IAB-donor to the IAB-node.

In this design, for example, a beneficial effect is as follows. The first IAB-donor-CU can receive and send data through the second TNLA by using the IP address allocated by the second IAB-donor to the IAB-node.

According to a second aspect, this application provides a communication method. The method may include: A second integrated access and backhaul IAB-donor-CU sends an FlAP message type indication and a QoS attribute to a first IAB-donor-CU, where there is a correspondence between the F 1AP message type indication and the QoS attribute. The correspondence is used to determine a QoS attribute corresponding to an FlAP message of the first IAB-donor-CU, and an F1 interface is a communication interface between the first IAB-donor-CU and a distributed unit DU of an IAB-node. Alternatively, a second integrated access and backhaul IAB-donor-central unit CU sends a user plane data indication and a QoS attribute to a first IAB-donor-CU, where there is a correspondence between the user plane data indication and the QoS attribute, and the correspondence is used to determine a QoS attribute corresponding to user plane data of the first IAB-donor-CU.

In a possible design, the method includes: The second IAB-donor-CU sends, to the first IAB-donor-CU, an IP address allocated by the second IAB-donor to the IAB-node, where the IP address is used to transmit the FlAP message or the user plane data.

According to a third aspect, this application provides a communication method. The method may include: A second IAB-donor-central unit CU receives an FlAP message type indication and a QoS attribute from a first IAB-donor-CU, where there is a correspondence between the FlAP message type indication and the QoS attribute, and an F1 interface is a communication interface between the first IAB-donor-CU and a DU of an IAB-node. Alternatively, a second IAB-donor-CU receives a user plane data indication and a QoS attribute from a first IAB-donor-CU, where there is a correspondence between the user plane data indication and the QoS attribute.

The second IAB-donor-CU sends, based on the correspondence, a route configuration and a bearer configuration that correspond to the QoS attribute to a second IAB-donor-DU.

In a possible design, the method includes: The second IAB-donor-CU sends, to the second IAB-donor-DU, an IP address allocated by the first IAB-donor to the IAB-node and a backhaul adaptation protocol (backhaul adaptation protocol, BAP) address allocated by the second IAB-donor to the IAB-node, where there is a correspondence between the IP address and the BAP address, and the correspondence is used to determine a BAP address of a target node corresponding to the FlAP message. The F1 interface is a communication interface between the first IAB-donor-CU and the DU of the IAB-node.

According to a fourth aspect, this application provides a communication method. The method may include: A second IAB-donor-distributed unit DU receives an F1AP message and a QoS attribute corresponding to the FlAP message from a first IAB-donor-CU, or receives user plane data and a QoS attribute corresponding to the user plane data from a first IAB-donor-CU, where an F1 interface is a communication interface between the first IAB-donor-CU and a DU of an IAB-node.

The second IAB-donor-DU may perform routing and bearer mapping on the F1AP message or the user plane data based on a route configuration and a bearer configuration that correspond to the QoS attribute.

In a possible design, the method includes: The second IAB-donor-DU receives, from a second IAB-donor-CU, an IP address allocated by the first IAB-donor to the IAB-node and a BAP address allocated by the second IAB-donor to the IAB-node, where there is a correspondence between the IP address and the BAP address.

The second IAB-donor-DU may determine, based on the correspondence, a BAP address of a target node corresponding to the FlAP message or the user plane data, where the F1 interface is a communication interface between the first IAB-donor-CU and the DU of the IAB-node.

According to a fifth aspect, this application provides a communication method. The method may include: An IAB-node establishes a first TNLA between a first IAB-donor-CU and a DU of the IAB-node by using an IP address allocated by a second IAB-donor to the IAB-node. Then, the IAB-node receives, through the first TNLA, an F1 application protocol FlAP message or user plane data from the first IAB-donor-CU, where an F1 interface is a communication interface between the first IAB-donor-CU and the DU of the IAB-node.

In any one of the first aspect to the third aspect and the possible designs thereof, the F1AP message type includes a user equipment associated type and a non-user equipment associated type.

In any one of the first aspect to the third aspect and the possible designs thereof, the user plane data indication is a general packet radio service tunneling protocol for the user plane tunnel identifier or an IP address of the F1 interface.

In any one of the first aspect to the fifth aspect and the possible designs thereof, the QoS attribute is a differentiated services code point (differentiated services code point, DSCP) and/or a flow label (flow label).

In any one of the first aspect to the fifth aspect and the possible designs thereof, the FlAP message carries configuration information of the DU of the IAB-node under the first IAB-donor.

According to a sixth aspect, this application provides a communication method. The method may include: An IAB-node obtains configuration information of a DU of the IAB-node under a target IAB-donor, and activates the configuration information after a mobile terminal (mobile terminal, MT) of the IAB-node is handed over from a source IAB-donor to the target IAB-donor.

According to this method, for example, a beneficial effect is as follows. The IAB-node may not make the configuration information of the DU of the IAB-node under the target IAB-donor take effect during handover of the MT part, so that a resource of the MT of the IAB-node and a resource of the DU of the IAB-node can be coordinated and allocated.

In a possible design, the IAB-node may receive, from the target IAB-donor, the configuration information of the distributed unit DU of the IAB-node under the target IAB-donor.

In this design, for example, a beneficial effect is as follows. A procedure of establishing an F1 interface can be simplified, thereby improving handover efficiency.

In a possible design, the method further includes: The IAB-node receives second information from the target IAB-donor, where the second information is used to activate the configuration information. That the IAB-node activates the configuration information includes: The IAB-node activates the configuration information based on the second information.

In this design, for example, a beneficial effect is as follows. The target IAB-donor may flexibly control activation of the configuration information.

In a possible design, the method further includes: The IAB-node receives at least one piece of configuration information from a network management device. That an IAB-node obtains configuration information of a DU of the IAB-node under a target IAB-donor includes: The IAB-node determines the configuration information from the at least one piece of configuration information.

In a possible design, the method includes: The IAB-node sends, to the target IAB-donor, request information used to establish an F 1 interface, where the request information includes the configuration information of the DU of the IAB-node under the target IAB-donor. The IAB-node receives response information of the request information from the target IAB-donor.

In a possible design, the method includes: The IAB-node establishes a first transport network layer association TNLA between a target IAB-donor-CU and the DU of the IAB-node by using an IP address allocated by the target IAB-donor to the IAB-node. That the IAB-node sends, to the target IAB-donor, request information used to establish an F1 interface includes: The IAB-node sends, to the target IAB-donor through the first TNLA, the request information used to establish the F1 interface. That the IAB-node receives response information of the request information from the target IAB-donor includes: The IAB-node receives the response information of the request information from the target IAB-donor through the first TNLA.

In a possible design, before the mobile terminal MT of the IAB-node is handed over from the source IAB-donor to the target IAB-donor, the method includes: The IAB-node establishes a second transport network layer association TNLA between a target IAB-donor-CU and the DU of the IAB-node by using an IP address allocated by the source IAB-donor to the IAB-node. That the IAB-node sends, to the target IAB-donor, request information used to establish an F1 interface includes: The IAB-node sends, to the target IAB-donor through the second TNLA, the request information used to establish the F1 interface. That the IAB-node receives response information of the request information from the target IAB-donor includes: The IAB-node receives the response information of the request information from the target IAB-donor through the second TNLA.

In a possible design, before the mobile terminal MT of the IAB-node is handed over from the source IAB-donor to the target IAB-donor, the method includes: The IAB-node establishes a second transport network layer association TNLA between a target IAB-donor-CU and the DU of the IAB-node by using an IP address allocated by the source IAB-donor to the IAB-node. That the IAB-node sends, to the target IAB-donor, request information used to establish an F1 interface includes: The IAB-node sends, to the target IAB-donor through the second TNLA, the request information used to establish the F 1 interface.

In a possible design, after the mobile terminal MT of the IAB-node is handed over from the source IAB-donor to the target IAB-donor, the method includes: The IAB-node establishes a first TNLA between the target IAB-donor-CU and the DU of the IAB-node by using an IP address allocated by the target IAB-donor to the IAB-node. That the IAB-node receives response information of the request information from the target IAB-donor includes: The IAB-node receives the response information of the request information from the target IAB-donor through the first TNLA.

In a possible design, the method includes: If the IAB-node receives the response information of the request information from the target IAB-donor before the mobile terminal MT of the IAB-node is handed over from the source IAB-donor to the target IAB-donor, the response information is used to deactivate the configuration information of the DU of the IAB-node under the target IAB-donor.

In this design, for example, a beneficial effect is as follows: Before the IAB-MT completes handover, the configuration information of the DU of the IAB-node under the target IAB-donor may not be mistakenly activated by the response information of the request information.

In a possible design, the method includes: If the IAB-node receives the response information of the request information from the target IAB-donor after the mobile terminal MT of the IAB-node is handed over from the source IAB-donor to the target IAB-donor, the response information is used to activate the configuration information of the DU of the IAB-node under the target IAB-donor.

In this design, for example, a beneficial effect is as follows: The response information of the request information may be reused to activate the configuration information of the DU of the IAB-node under the target IAB-donor, to reduce air interface overheads.

In a possible design, that the IAB-node activates the configuration information includes: The IAB-node automatically activates the configuration information. In this design, for example, a beneficial effect is as follows: No dedicated activation information is needed, so that air interface overheads can be reduced.

In a possible design, the method further includes: The IAB-node sends first information to the target IAB-donor, where the first information indicates that the configuration information has been activated. In this design, for example, a beneficial effect is as follows. The IAB-node may be enabled to align an activation status of the configuration information with the target IAB-donor.

According to a seventh aspect, this application provides a communication method. The method may include: A target integrated access and backhaul IAB-donor receives first information from an IAB-node, where the first information indicates that configuration information of a distributed unit DU of the IAB -node under the target IAB-donor has been activated. The target IAB-donor determines, based on the first information, that the configuration information has been activated.

According to an eighth aspect, this application provides a communication method. The method may include: A target integrated access and backhaul IAB-donor receives, from an IAB-node, request information used to establish an F1 interface. The target IAB-donor sends response information to the IAB-node before a mobile terminal MT of the IAB-node is handed over from a source IAB-donor to the target IAB-donor, where the response information is used to deactivate configuration information of a DU of the IAB-node under the target IAB-donor. Alternatively, the target IAB-donor sends response information to the IAB-node after a mobile terminal MT of the IAB-node is handed over from a source IAB-donor to the target IAB-donor, where the response information is used to activate configuration information of a DU of the IAB-node under the target IAB-donor.

In a possible design, that a target IAB-donor receives, from an IAB-node, request information used to establish an F1 interface includes: The target IAB-donor receives, from the IAB-node through a second transport network layer association TNLA between a target IAB-donor-CU and the DU of the IAB-node, the request information used to establish the F 1 interface, where the second TNLA corresponds to an internet protocol IP address allocated by the source IAB-donor to the IAB-node. That the target IAB-donor sends response information of the request information to the IAB-node includes: The target IAB-donor sends the response information of the request information to the IAB-node through the second TNLA.

In a possible design, that a target IAB-donor receives, from an IAB-node, request information used to establish an F 1 interface includes: The target IAB-donor receives, from the IAB-node through a first transport network layer association TNLA between a target IAB-donor-CU and the DU of the IAB-node, the request information used to establish the F 1 interface, where the first TNLA corresponds to an internet protocol IP address allocated by the target IAB-donor to the IAB-node. That the target IAB-donor sends response information of the request information to the IAB-node includes: The target IAB-donor sends the response information of the request information to the IAB-node through the first TNLA.

In a possible design, before the MT of the IAB-node is handed over from the source IAB-donor to the target IAB-donor, that a target IAB-donor receives, from an IAB-node, request information used to establish an F1 interface includes: The target IAB-donor receives, from the IAB-node through a second transport network layer association TNLA between a target IAB-donor-CU and the DU of the IAB-node, the request information used to establish the F 1 interface, where the second TNLA corresponds to an internet protocol IP address allocated by the source IAB-donor to the IAB-node.

In a possible design, after the MT of the IAB-node is handed over from the source IAB-donor to the target IAB-donor, that the target IAB-donor sends response information of the request information to the IAB-node includes: The target IAB-donor sends the response information of the request information to the IAB-node through a first TNLA between the target IAB-donor-CU and the DU of the IAB-node, where the first TNLA corresponds to an IP address allocated by the target IAB-donor to the IAB-node.

According to a ninth aspect, this application provides a communication apparatus. The apparatus includes a module configured to perform any one of the methods in the first aspect to the eighth aspect and any design thereof.

According to a tenth aspect, this application provides a communication apparatus, including a processor and a memory. The processor is coupled to the memory and is configured to implement any one of the methods in the first aspect to the eighth aspect and any design thereof.

According to an eleventh aspect, this application provides a communication apparatus, including at least one processor and an interface circuit. The interface circuit is configured to receive a signal from another communication apparatus other than the communication apparatus and transmit the signal to the processor. The interface circuit is configured to send the signal from the processor to the another communication apparatus other than the communication apparatus. The processor implements any one of the methods in the first aspect to the eighth aspect and any design thereof by using a logic circuit or executing program instructions.

In a possible design, the apparatus may be a chip or an integrated circuit in a node in any one of the methods in the first aspect to the eighth aspect and any design thereof.

Optionally, the communication apparatus may further include at least one memory, and the memory stores related program instructions.

According to a twelfth aspect, this application provides a communication apparatus. The apparatus has a function or an operation for implementing any one of the methods in the first aspect to the eighth aspect and any design thereof. The function or the operation may be implemented by hardware, or may be implemented by hardware executing corresponding software. The hardware or the software includes one or more units (modules) corresponding to the function or the operation, for example, a transceiver unit and a processing unit.

According to a thirteenth aspect, this application provides a communication apparatus, including at least one processor and a memory. The at least one processor is coupled to the memory, the memory stores a computer program, and the at least one processor executes the computer program, so that the communication apparatus performs any one of the methods in the first aspect to the eighth aspect and any design thereof.

According to a fourteenth aspect, this application provides a communication apparatus, including at least one processor and an interface circuit. A related computer program is executed in the at least one processor, so that the communication apparatus performs any one of the methods in the first aspect to the eighth aspect and any design thereof.

According to a fifteenth aspect, this application provides a computer-readable storage medium. The computer-readable storage medium includes related program instructions. When the related program instructions are executed, a communication apparatus is enabled to implement any one of the methods in the first aspect to the eighth aspect and any design thereof.

According to a sixteenth aspect, this application provides a computer program product. The computer program product includes related program instructions. When the related program instructions are executed, any one of the methods in the first aspect to the eighth aspect and any design thereof is implemented.

According to a seventeenth aspect, this application further provides a chip. The chip is configured to perform any one of the methods in the first aspect to the eighth aspect and any design thereof.

According to an eighteenth aspect, this application provides a communication system. The communication system includes at least one communication apparatus in any one of the ninth aspect to the fifteenth aspect and any design thereof.

### BRIEF DESCRIPTION OF DRAWINGS

The accompanying drawings that may be included in this specification and form a part of this specification together with the specification show example embodiments, or features, and aspects of this application, and are used to explain principles of this application. Evidently, the accompanying drawings in the following descriptions show merely some embodiments of this application. A person of ordinary skill in the art may further derive other drawings from these accompanying drawings without creative efforts.
FIG. 1 is a schematic diagram of a possible communication system according to this application;
FIG. 2 is a schematic diagram of an IAB-donor according to an embodiment of this application;
FIG. 3 is a schematic diagram of a control plane protocol stack in an IAB network according to an embodiment of this application;
FIG. 4 is a schematic diagram of a user plane protocol stack in an IAB network according to an embodiment of this application;
FIG. 5A is a schematic diagram of IAB-node migration according to an embodiment of this application;
FIG. 5B is a schematic diagram of another IAB-node migration according to an embodiment of this application;
FIG. 6A and FIG. 6B a schematic diagram of a communication method according to an embodiment of this application;
FIG. 7 is a schematic diagram of a communication method according to an embodiment of this application;
FIG. 8 is a schematic block diagram of a communication apparatus according to an embodiment of this application;
FIG. 9 is a schematic block diagram of a communication apparatus according to an embodiment of this application;
FIG. 10 is a schematic block diagram of a communication apparatus according to an embodiment of this application;
FIG. 11 is a schematic block diagram of a communication apparatus according to an embodiment of this application; and
FIG. 12 is a schematic block diagram of an apparatus according to an embodiment of this application.

### DESCRIPTION OF EMBODIMENTS

Compared with a fourth generation mobile communication system or a long term evolution (long term evolution, LTE) system, a fifth generation mobile communication (5G) system or a new radio (new radio, NR) system comprehensively imposes stricter requirements on various network performance indicators, for example, capacity indicators improved by 1000 times, wider coverage requirements, ultra-high reliability and ultra-low latency. In an aspect, considering that high-frequency carrier frequency resources are abundant, high-frequency small cell networking becomes more and more popular in hotspot areas to meet ultra-high capacity requirements of 5G. High-frequency carriers have poor propagation characteristics, severe attenuation due to blocking, and a small coverage area. Therefore, a large quantity of small cells need to be deployed intensively. Correspondingly, providing fiber backhaul for these small cells needs high costs and has great difficulty in construction. Therefore, an economical and convenient backhaul solution is needed. In another aspect, from the perspective of wide coverage requirements, to provide network coverage in some remote areas, fiber deployment is difficult and needs high costs. Therefore, a flexible and convenient access and backhaul solution is needed. A wireless backhaul device provides an idea for resolving the foregoing two problems. Both an access link (access link, AL) and a backhaul link (backhaul link, BL) of the wireless backhaul device use a wireless transmission solution, to reduce fiber deployment. The wireless backhaul device may be a relay node (Relay Node, RN), or may be an integrated access and backhaul (Integrated Access and Backhaul, IAB) node, or may be another device that provides a wireless backhaul function. This is not limited in this application. In an IAB network, an IAB-node (IAB-node) serves as the wireless backhaul device, and may provide a wireless access service for user equipment (user equipment, UE). Service data of the UE is transmitted by connecting the IAB-node to an IAB-donor or a donor base station over a wireless backhaul link. By using the IAB-node, an antenna can be shared for access and backhaul, and a quantity of antennas of a base station can be reduced.

The following describes embodiments of this application with reference to the accompanying drawings. Features or content denoted by dashed lines in the figure may be understood as optional operations or optional structures in embodiments of this application.

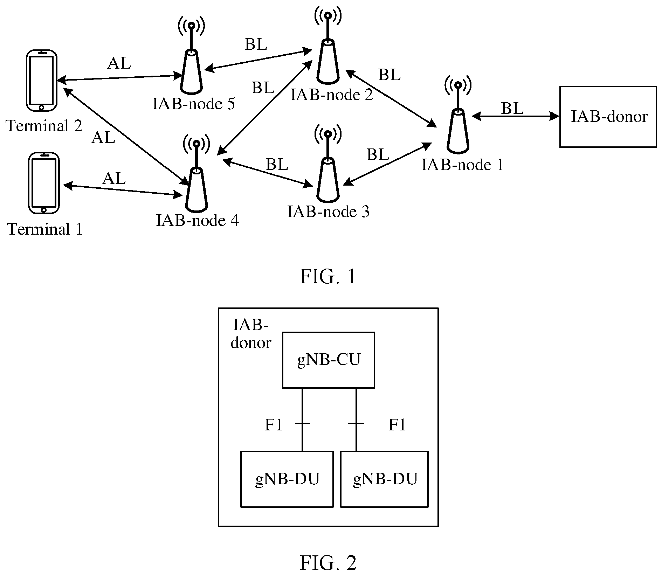

FIG. 1 is a schematic diagram of a possible communication system according to this application. The communication system includes a terminal, an IAB-node, and an IAB-donor.

A terminal in FIG. 1 may be an access terminal device, a subscriber unit, user equipment, a subscriber station, a mobile station, a remote station, a remote terminal device, a mobile device, a user terminal device, a wireless terminal device, a user agent, a user apparatus, or the like. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (such as a smartwatch or a smartband), a terminal device in a smart furniture or home appliance or a future 5G network, a terminal device in a future evolved public land mobile network (public land mobile network, PLMN), an onboard device in vehicle to everything (vehicle to everything, V2X), customer premises equipment (customer premises equipment, CPE), or the like. A specific implementation of the user equipment is not limited in this application.

The IAB-node in FIG. 1 may include a mobile terminal (mobile terminal, MT) and a distributed unit DU (distributed unit, DU). When facing a parent node of the IAB-node, the IAB-node may be considered as a terminal device, that is, the MT. When facing a subordinate device of the IAB-node (the subordinate device may be another IAB child node or a common UE), the IAB-node may be considered as a network device, that is, the DU. It should be understood that the IAB-node is used as an example for each node in FIG. 1, and each IAB-node may be replaced with a common relay node (relay node, RN). In this application, the MT of the IAB-node may be referred to as IAB-MT for short, the DU of the IAB-node may be referred to as IAB-DU for short, a CU of an IAB-donor may be referred to as donor-CU for short, and a DU of an IAB-donor may be referred to as donor-DU for short.

The IAB-donor (IAB-donor) in FIG. 1 may be a donor base station, and the IAB-donor may be referred to as a DgNB (donor gNodeB) for short in a 5G network. The IAB-donor may be a complete entity, or may exist in a form in which a central unit (central unit, CU) (which is referred to as donor-CU or gNB-CU for short in this application) and a distributed unit (distributed unit, DU) (which is referred to as donor-DU or gNB-DU for short in this application) are separated. As shown in FIG. 2, the IAB-donor may be a gNB located in a 5G radio access network (5G radio access network, 5G RAN). The IAB-donor may include the gNB-CU and the gNB-DU. The gNB-CU and the gNB-DU are connected through an F1 interface. The F1 interface may further include a control plane interface (F1-C) and a user plane interface (F1-U). The CU is connected to a core network through a next generation (next generation, NG) interface. Alternatively, the gNB-CU or the donor-CU may exist in a form in which a user plane (user plane, UP) (which is referred to as CU-UP for short in this application) and a control plane (control plane, CP) (which is referred to as CU-CP for short in this application) are separated. In other words, the gNB-CU or the donor-CU includes a CU-CP and a CU-UP. One gNB-CU may include one gNB-CU-CP and at least one gNB-CU-UP. Alternatively, one donor-CU may include one donor-CU-CP and at least one donor-CU-UP. The donor-CU and the donor-DU may be connected in a wired manner. In this application, the IAB-donor connected to the IAB-node may be referred to as an IAB-donor of the IAB-node for short. The IAB-node may directly access the IAB-donor, or the IAB-node may be connected to the IAB-donor by using another IAB-node.

To ensure service transmission reliability, an IAB network supports multi-hop IAB-node networking and multi-connection IAB-node networking. Therefore, there may be a plurality of transmission paths between the terminal and the IAB-donor. On a path, there is a definite hierarchical relationship between IAB-nodes, and between the IAB-node and the IAB-donor connected to the IAB-node. Each IAB-node considers a node that provides backhaul services to the IAB-node as a parent node. Accordingly, each IAB-node may be considered as a child node of the parent node of the IAB-node.

For example, refer to FIG. 1. A parent node of an IAB-node 1 is the IAB-donor. The IAB-node 1 is a parent node of an IAB-node 2 and an IAB-node 3. Both the IAB-node 2 and the IAB-node 3 are parent nodes of an IAB-node 4. A parent node of an IAB-node 5 is the IAB-node 2. An uplink data packet of the terminal may be transmitted to the IAB-donor by using one or more IAB-nodes, and a downlink data packet is sent by the IAB-donor to the terminal by using one or more IAB-nodes. There are two available paths for data packet transmission between a terminal 1 and the IAB-donor: terminal 1-IAB-node 4-IAB-node 3-IAB-node 1-IAB-donor, and terminal 1-IAB-node 4-IAB-node 2-IAB-node 1-IAB-donor. There are three available paths for data packet transmission between a terminal 2 and the IAB-donor: terminal 2-IAB-node 4-IAB-node 3-IAB-node 1-IAB-donor, terminal 2-IAB-node 4-IAB-node 2-IAB-node 1-IAB-donor, and terminal 2-IAB-node 5-IAB-node 2-IAB-node 1-IAB-donor.

To ensure normal data transmission between the terminal and the IAB-donor, the IAB-donor needs to configure a routing table for each IAB-node, that is, configure next-hop nodes corresponding to different paths. In addition, the IAB-donor needs to determine a transmission path for data transmission. In other words, a transmission path is determined before data transmission. The transmission path may be referred to as a primary path. Route (routing) transmission of data is performed between the terminal and the IAB-donor over the primary path, and other paths may be referred to as backup (backup) paths. Only when the primary path is unavailable, for example, an RLF occurs on a link on the primary path, the backup path is used for re-routing (re-routing). For example, as shown in FIG. 1, a primary data transmission path configured by the IAB-donor for the terminal 2 is: terminal 2-IAB-node 4-IAB-node 2-IAB-node 1-IAB-donor. When detecting that an RLF occurs on a link between the IAB-node 2 and the IAB-node 1, and the link cannot be restored, the IAB-node 2 sends radio link failure (radio link failure, RLF) indication information to the IAB-node 4. Based on the indication information, the IAB-node 4 may trigger data re-routing, and temporarily transmit uplink data received from the terminal 2 over a backup path, that is, terminal 2-IAB-node 4-IAB-node 3-IAB-node 1-IAB-donor.

All intermediate IAB-nodes on an uplink path between an IAB-node and the IAB-donor may be referred to as upstream nodes (upstream node) of the IAB-node. For example, both the IAB-node 1 and the IAB-node 2 in FIG. 1 may be referred to as upstream IAB-nodes of the IAB-node 5. All intermediate IAB-nodes on a downlink path between an IAB-node and the terminal may be referred to as downstream nodes (downstream node) of the IAB-node. For example, all the IAB-node 2, the IAB-node 3, the IAB-node 4, and the IAB-node 5 in FIG. 1 may be referred to as downstream nodes of the IAB-node 1. The downstream nodes include a child node, a child node (or referred to as a grandson node) of the child node, and the like. The downstream node can be another IAB-node or a terminal. For example, the terminal 1 in FIG. 1 may be referred to as a downstream node of the IAB-node 4, the IAB-node 4 and the IAB-node 5 may be referred to as downstream nodes of the IAB-node 1, and the terminal 1 and the terminal 2 may be referred to as downstream nodes of the IAB-node 1.

It may be understood that, in the IAB network, a transmission path between the terminal and the IAB-donor may include one or more IAB-nodes. Each IAB-node needs to maintain a wireless backhaul link to the parent node and a wireless link to the child node. If the child node of the IAB-node is a terminal, there is a radio access link between the IAB-node and the child node (that is, the terminal). If the child node of the IAB-node is another IAB-node, there is a wireless backhaul link between the IAB-node and the child node (that is, the another IAB-node). For example, refer to FIG. 1. On the path "terminal 1-IAB-node 4-IAB-node 3-IAB-node 1-IAB-donor", the terminal 1 accesses the IAB-node 4 over a wireless access link, and the IAB-node 4 is connected to the IAB-node 3 over a wireless backhaul link. The IAB-node 3 is connected to the IAB-node 1 over a wireless backhaul link, and the IAB-node 1 is connected to the IAB-donor over a wireless backhaul link.

The foregoing IAB networking scenario is merely an example. In an IAB scenario in which multi-hop and multi-connection are combined, there are many other possibilities in the IAB networking scenario. For example, an IAB-donor and an IAB-node under another IAB-donor form a dual connection to serve a terminal, and the like. This is not listed one by one herein.

In this embodiment of this application, an access IAB-node is an IAB-node accessed by the terminal, and the intermediate IAB-node is an IAB-node that provides a wireless backhaul service for the terminal or the IAB-node. For example, refer to FIG. 1. On the path "terminal 1-IAB-node 4-IAB-node 3-IAB-node 1-IAB-donor", the IAB-node 4 is an access IAB-node, and the IAB-node 3 and the IAB-node 1 are intermediate IAB-nodes. It should be noted that an IAB-node is an access lAB-node for a terminal that accesses the IAB-node, and is an intermediate IAB-node for another terminal that accesses another IAB-node. Therefore, whether an IAB-node is specifically an access IAB-node or an intermediate IAB-node is not fixed and needs to be determined based on a specific application scenario.

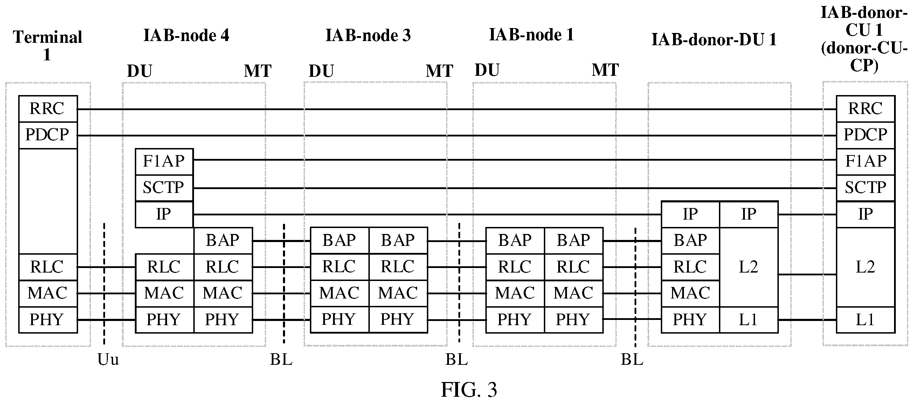

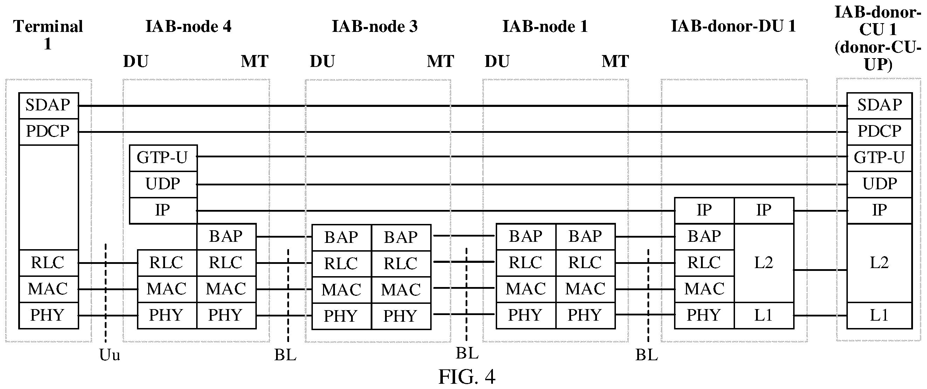

FIG. 3 and FIG. 4 are a schematic diagram of a control plane protocol stack and a schematic diagram of a user plane protocol stack in an IAB network according to an embodiment of this application. The following provides descriptions with reference to FIG. 3 and FIG. 4.

For a control plane, as shown in FIG. 3, a Uu interface is established between a terminal 1 and an IAB4-DU (which is a DU of an IAB-node 4), and peer protocol layers include an RLC layer, a MAC layer, and a PHY layer. An F1-C interface is established between an IAB4-DU and an IAB-donor-CU 1, and peer protocol layers include an F1 application protocol (F1 application protocol, F1AP) layer and a stream control transmission protocol (stream control transmission protocol, SCTP) layer. Peer protocol layers between an IAB-donor-DU 1 and the IAB-donor-CU 1 include an internet protocol IP (internet protocol) layer, an L2, and an L1. Backhaul links (backhaul link, BL) are established between the IAB-node 4 and an IAB-node 3, between the IAB-node 3 and an IAB-node 1, and between the IAB-node 1 and the IAB-donor-DU 1, and peer protocol layers include a backhaul adaptation protocol (backhaul adaptation protocol, BAP) layer, an RLC layer, a MAC layer, and a PHY layer. In addition, peer RRC layers and peer PDCP layers are established between the terminal 1 and the IAB-donor-CU 1, and peer IP layers are established between the IAB4-DU and the IAB-donor-DU 1.

It can be learned that, compared with a control plane protocol stack of a single air interface, in the control plane protocol stack in the IAB network, a DU of the access IAB-node implements functions of a gNB-DU of the single air interface (namely, functions of establishing a peer RLC layer, MAC layer, and PHY layer with the terminal and establishing a peer F1AP layer and SCTP layer with a CU). It may be understood that the DU of the access IAB-node in the IAB network implements a function of the gNB-DU of the single air interface, and the IAB-donor-CU implements a function of a gNB-CU of the single air interface.

On the control plane, an RRC message is encapsulated in an FlAP message between the access IAB-node and the IAB-donor-CU for transmission. Specifically, in an uplink direction, the terminal 1 encapsulates the RRC message in a PDCP protocol data unit (protocol data unit, PDU), and sends the PDCP protocol data unit to the IAB4-DU after processing is sequentially performed at the RLC layer, the MAC layer, and the PHY layer. The IAB4-DU obtains the PDCP PDU after processing is sequentially performed at the PHY layer, the MAC layer, and the RLC layer, encapsulates the PDCP PDU in the FlAP message, and obtains an IP packet after processing is sequentially performed at the SCTP layer and the IP layer. An IAB4-MT (which is an MT of the IAB-node 4) sends the IP packet to an IAB3 -DU after processing is separately performed at the BAP layer, the RLC layer, the MAC layer, and the PHY layer. The IAB3-DU obtains the IP packet after processing is sequentially performed at the PHY layer, the MAC layer, the RLC layer, and the BAP layer. Then, an IAB3-MT sends the IP packet to an IAB1-DU by using an operation similar to that of the IAB4-MT. Similarly, an IAB1-MT sends the IP packet to the IAB-donor-DU 1. After obtaining the IP packet through parsing, the IAB-donor-DU 1 sends the IP packet to the IAB-donor-CU 1. The IAB-donor-CU 1 obtains the RRC message after processing is sequentially performed on the IP packet at the SCTP layer, the FlAP layer, and the PDCP layer. Operations in a downlink direction are similar. Details are not described herein again.

For a user plane, as shown in FIG. 4, a Uu interface is established between a terminal 1 and an IAB4-DU, and peer protocol layers include an RLC layer, a MAC layer, and a PHY layer. An F1-U interface is established between the IAB4-DU and an IAB-donor-CU 1, and peer protocol layers include a general packet radio service tunneling protocol for the user plane (general packet radio service tunneling protocol for the user plane, GTP-U) layer and a user datagram protocol (user datagram protocol, UDP) layer. An IAB-donor-DU 1 and the IAB-donor-CU 1 are connected in a wired manner, and peer protocol layers include an IP layer, an L2, and an L1. Backhaul links (backhaul link, BL) are established between the IAB-node 4 and an IAB-node 3, between the IAB-node 3 and an IAB-node 1, and between the IAB-node 1 and the IAB-donor-DU 1, and peer protocol layers include a BAP layer, an RLC layer, a MAC layer, and a PHY layer. In addition, peer SDAP layers and peer PDCP layers are established between the terminal 1 and the IAB-donor-CU 1, and peer IP layers are established between the IAB4-DU and the IAB-donor-DU 1.

It can be learned that, compared with a user plane protocol stack of a single air interface, in the user plane protocol stack in the IAB network, a DU of the access IAB-node implements some functions of a gNB-DU of the single air interface (namely, functions of establishing a peer RLC layer, a peer MAC layer, and a peer PHY layer with the terminal and establishing a peer GTP-U layer and a peer UDP layer with the IAB-donor-CU 1). It may be understood that the DU of the access IAB-node implements a function of the gNB-DU of the single air interface, and the IAB-donor-CU implements a function of a gNB-CU of the single air interface.

On the user plane, a PDCP data packet is encapsulated in a GTP-U tunnel between the access IAB-node and the IAB-donor-CU for transmission. The GTP-U tunnel is established on the F1-U interface.

FIG. 3 and FIG. 4 are described by using the protocol stack in the IAB scenario shown in FIG. 1 as an example. It should be noted that an IAB-node may have one or more roles, and the IAB-node may have protocol stacks of the one or more roles. Alternatively, the IAB-node may have a set of protocol stacks, and the protocol stacks may perform processing on different roles of the IAB-node by using protocol layers corresponding to the different roles. The following provides descriptions by using an example in which the IAB-node has the protocol stacks of the one or more roles.

### (1) Protocol stack of a common terminal

When accessing the IAB network, the IAB-node can function as a common terminal. In this case, an MT of the IAB-node has a protocol stack of the common terminal, for example, the protocol stack of the terminal 1 in FIG. 3 and FIG. 4: the RRC layer, the PDCP layer, the RLC layer, the MAC layer, and the PHY layer. On a control plane, an RRC message of the IAB-node is encapsulated in an FlAP message between a parent node of the IAB-node and an IAB-donor-CU for transmission. On a user plane, a PDCP data packet of the IAB-node is encapsulated in a GTP-U tunnel between a parent node of the IAB-node and an IAB-donor-CU for transmission.

In addition, after the IAB-node accesses the IAB network, the IAB-node can still function as the common terminal, for example, transmit an uplink and/or downlink data packet (for example, an operation, administration and maintenance (operation, administration and maintenance, OAM) data packet) of the IAB-node with the IAB-donor, and perform measurement through the RRC layer

### (2) Protocol stack of an access IAB-node

After the IAB-node accesses the IAB network, the IAB-node may provide an access service for a terminal, to function as an access IAB-node. In this case, the IAB-node has a protocol stack of the access IAB-node, for example, the protocol stack of the IAB-node 4 in FIG. 3 and FIG. 4.

In this case, there may be two sets of protocol stacks on an interface that is of the IAB-node and that faces a parent node of the IAB-node. One is a protocol stack of a common terminal, and the other is a protocol stack (namely, a protocol stack of the access IAB-node) that provides a backhaul service for the terminal. Optionally, same protocol layers of the two sets of protocol stacks may be shared. For example, the two sets of protocol stacks correspond to a same RLC layer, a same MAC layer, a same PHY layer, or a same BAP layer.

### (3) Protocol stack of an intermediate IAB-node

After the IAB-node accesses the IAB network, the IAB-node may function as an intermediate IAB-node. In this case, the IAB-node has a protocol stack of the intermediate IAB-node, for example, a protocol stack of the IAB-node 3 or the IAB-node 1 in FIG. 3 and FIG. 4.

In this case, there may be two sets of protocol stacks on an interface that is of the IAB-node and that faces a parent node of the IAB-node. One is a protocol stack of a common terminal, and the other is a protocol stack (namely, a protocol stack of the intermediate IAB-node) that provides a backhaul service for an IAB child node. Optionally, same protocol layers of the two sets of protocol stacks may be shared. For example, the two sets of protocol stacks correspond to a same RLC layer, a same MAC layer, a same PHY layer, or a same BAP layer

In addition, the IAB-node may function as an access IAB-node and an intermediate IAB-node at the same time. For example, the IAB-node may be an access IAB-node for some terminals and an intermediate lAB-node for other terminals. In this case, the IAB-node may have three sets of protocol stacks: One is the protocol stack of the common terminal, one is the protocol stack of the access IAB-node, and one is the protocol stack of the intermediate IAB-node. Optionally, same protocol layers of the three sets of protocol stacks may be shared. For example, the three sets of protocol stacks correspond to a same RLC layer, a same MAC layer, a same PHY layer, or a same BAP layer

It should be noted that FIG. 3 and FIG. 4 are described by using the IAB network as an example. Content in FIG. 3 and FIG. 4 is also applicable to a relay network other than the IAB network. For a control plane protocol stack architecture of the relay network, refer to FIG. 3. For a user plane protocol stack architecture of the relay network, refer to FIG. 4. The IAB-node in FIG. 3 and FIG. 4 may be replaced with a relay (relay). For example, the IAB-node 4 may be replaced with a relay node 4, the IAB-node 3 may be replaced with a relay node 3, the IAB-node 1 may be replaced with a relay node 1, and the IAB-donor 1 may be replaced with a donor base station 1. The donor base station has a CU-DU protocol stack. For other content, refer to the descriptions in FIG. 3 and FIG. 4. Details are not described herein again.

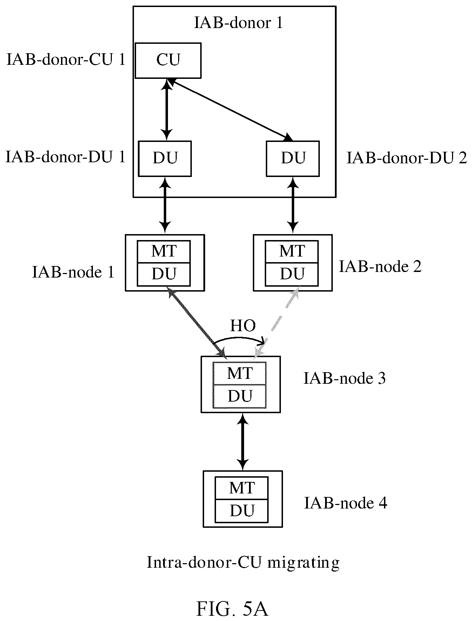

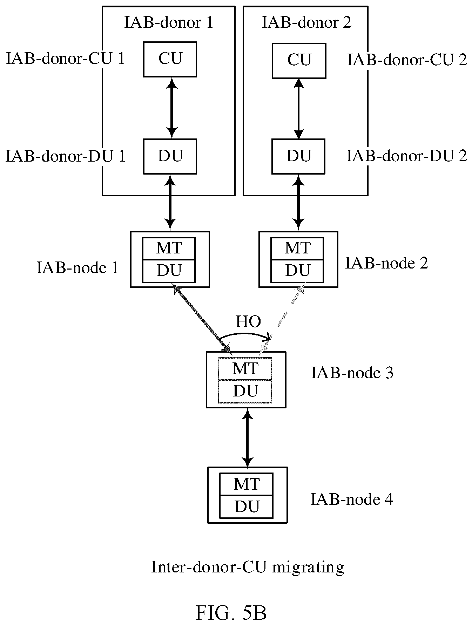

FIG. 5A and FIG. 5B are schematic diagrams of two types of IAB-node migration according to an embodiment of this application.

As shown in FIG. 5A, an IAB-node 3 migrates from a source parent node (IAB-node 1) to a target parent node (IAB-node 2) without changing an IAB-donor. This migration may be referred to as intra-IAB-donor migrating, or intra-donor-CU migrating (intra-donor-CU migrating).

In FIG. 5A, a plurality of IAB-nodes may be further included between the IAB-node 1 and the IAB-donor 1, or the IAB-node 3 may be directly connected to the IAB-donor 1, in other words, the IAB-node 1 and/or the IAB-node 2 in FIG. 5A may not exist.

As shown in FIG. 5B, an IAB-node 3 migrates from a source parent node (IAB-node 1) to a target parent node (IAB-node 2) with a connected IAB-donor changed, that is, migrates from a source IAB-donor (IAB-donor 1) to a target IAB-donor (IAB-donor 2). This migration may be referred to as inter-IAB-donor migrating or inter-donor-CU migrating (inter-donor-CU migrating).

In FIG. 5A and FIG. 5B, one, two, or more donor-DUs may be connected to the IAB-donor-CU. In FIG. 5A, an example in which an IAB-donor-CU is connected to two donor-DUs is used. In FIG. 5B, an example in which an IAB-donor-CU is connected to one donor-DU is used. However, a quantity of donor-DUs connected to the IAB-donor-CU is not limited in this application.

In addition, in FIG. 5A and FIG. 5B, a plurality of IAB-nodes may be further included between the IAB-node 1 and the IAB-donor 1, or the IAB-node 3 may be directly connected to the IAB-donor 1, in other words, the IAB-node 1 and/or the IAB-node 2 in FIG. 5A may not exist. The IAB-node 1 in FIG. 5B may not exist. Similarly, in FIG. 5B, a plurality of IAB-nodes may also be included between the IAB-node 2 and the IAB-donor 2, or the IAB-node 3 may be directly connected to the IAB-donor 2, in other words, the IAB-node 2 in FIG. 5B may not exist.

In addition, a child node (for example, the IAB-node 4 in FIG. 5A or 5B) of the IAB-node may migrate along with the IAB-node, that is, may also migrate from the source IAB-donor to the target IAB-donor. The method provided in embodiments of this application is applicable to migration of the IAB-node, and is also applicable to a scenario in which a downstream node of the IAB-node migrates along with the IAB-node. The migration of the IAB-node in this application may be an IAB-node whose migration is triggered by a source IAB-donor.

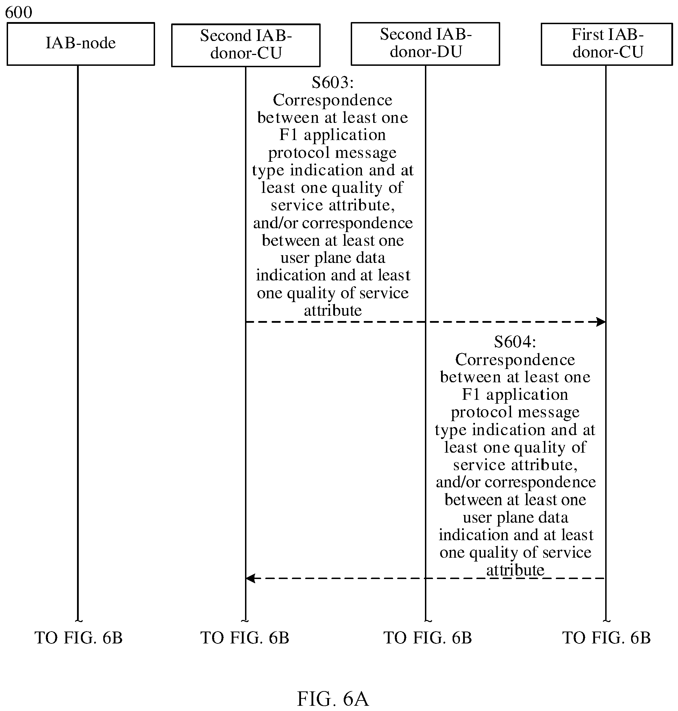

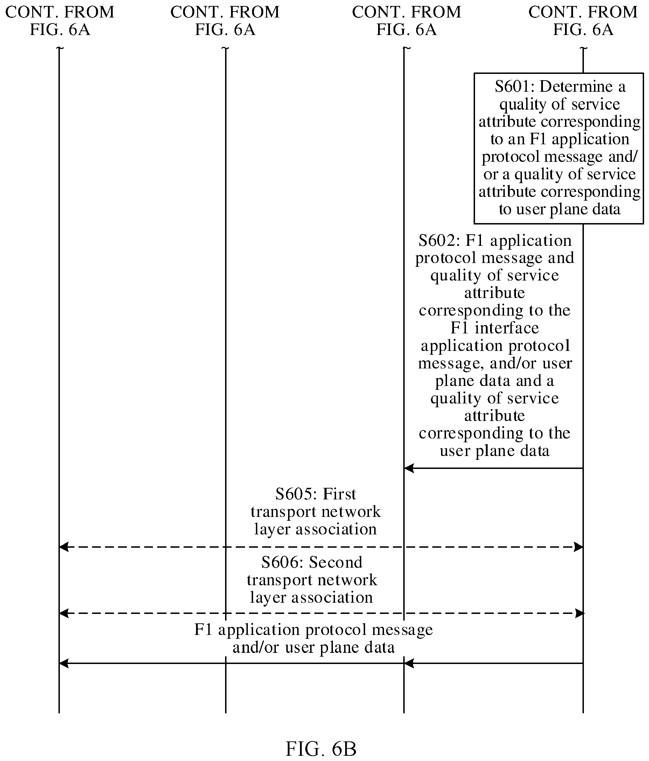

FIG. 6A and FIG. 6B show a communication method according to an embodiment of this application. The communication method 600 includes the following steps.

S601: A CU of a first IAB-donor (first IAB-donor-CU) determines a quality of service (quality of service, QoS) attribute corresponding to an F1 application protocol FlAP message and/or a quality of service QoS attribute corresponding to user plane data.

The F1AP message in this embodiment of this application is a control plane message on an F1 interface between the first IAB-donor-CU and an IAB-DU of an IAB-node. The user plane data in this embodiment of this application may be user plane data on the F1 interface between the first IAB-donor-CU and the IAB-DU of the IAB-node.

There may be a plurality of types of F1AP messages. For example, the types of the F1AP message may include a first type and a second type. A first-type F1AP message is mainly used for context management of the F1 interface, transmission of an RRC message, and the like. The context herein may be a context of the IAB -node, or may be a context of a terminal device. The RRC message herein may be a message between an RRC layer of an IAB-MT and an RRC layer of an IAB-donor-CU, or may be a message between an RRC layer of the terminal device and an RRC layer of the IAB-donor-CU. A second-type F1AP message is mainly used for F1 interface management, for example, establishment, reset, and configuration update of the F1 interface. For example, the first type may be referred to as user equipment associated (UE associated), and the second type may be referred to as non-user equipment associated (Non-UE associated). Different types of FlAP messages may have different priorities. For example, the priority may be represented by using a QoS attribute. A QoS attribute value may include a differentiated services code point (differentiated services code point, DSCP) and/or a flow label (flow label). Different types of F1AP messages correspond to different DSCP values or flow label values.

To distinguish between priorities of F1AP messages sent to the IAB-DU, after generating a FlAP message, the first IAB-donor-CU needs to determine a QoS attribute corresponding to the FlAP message, that is, a QoS attribute corresponding to an FlAP message type of the FlAP message.

The user plane data may include data of the terminal device, or may include data of the IAB-node, for example, data that is from a network management device and that is used to configure the IAB-node. Different user plane data has different QoS requirements, and may have different priorities. For example, the priority may be represented by using a QoS attribute. For example, user plane data having different QoS requirements may correspond to different DSCP values or flow label values. Similarly, to distinguish between priorities of user plane data sent to the IAB-DU, after generating user plane data, the first IAB-donor-CU needs to determine a QoS attribute corresponding to the user plane data. The user plane data may be identified by using a user plane data indication. The user plane data indication may be a GTP-U tunnel identifier, for example, a GTP tunnel endpoint identifier (GTP tunnel endpoint identifier, TEID) and/or an IP address.

S602: The first IAB-donor-CU sends the F1AP message and the QoS attribute corresponding to the F1AP message to a DU of a second IAB-donor (second IAB-donor-DU), and/or the first IAB-donor-CU sends the user plane data and the QoS attribute corresponding to the user plane data to a second IAB-donor-DU.

For example, after determining the QoS attribute corresponding to the FlAP message, the first IAB-donor-CU may encapsulate the FlAP message into an internet protocol (internet protocol, IP) packet, include the QoS attribute corresponding to the F1AP message to an IP header of the IP packet, and then send the IP packet to the second IAB-donor-DU in an IP routing manner.

Similarly, for example, after determining the QoS attribute corresponding to the user plane data, the first IAB-donor-CU may encapsulate the user plane data into an IP packet, include the QoS attribute corresponding to the user plane data to an IP header of the IP packet, and then send the IP packet to the second IAB-donor-DU in an IP routing manner.

For example, a source IP address of the IP packet may be an IP address of the first IAB-donor-CU, and a destination IP address of the IP packet may be an IP address of the IAB-node. The IP address of the IAB-node may be allocated by the first IAB-donor-CU to the IAB-node, or may be allocated by a second IAB-donor-CU to the IAB-node.

After receiving the IP packet, the second IAB-donor-DU performs routing and/or bearer mapping on the FlAP message in the IP packet based on the QoS attribute in the IP header of the IP packet, to further send the F1AP message to the IAB-node. For example, the second IAB-donor-DU determines, based on an internally stored correspondence between a QoS attribute and a route configuration and the QoS attribute in the IP packet, a route configuration corresponding to the IP packet, and then performs routing on the F 1AP message in the IP packet based on the route configuration corresponding to the IP packet. For example, the second IAB-donor-DU determines, based on an internally stored correspondence between a QoS attribute and a bearer configuration and the QoS attribute in the IP packet, a bearer configuration corresponding to the IP packet, and then performs bearer mapping on the FlAP message in the IP packet based on the bearer configuration corresponding to the IP packet. The route configuration may include a BAP routing identifier (backhaul adaptation protocol routing identifier, BAP routing ID) and/or a BAP address (BAP address) of a next-hop node. The bearer configuration may include a backhaul RLC channel identifier (backhaul RLC channel identifier, BH RLC CH ID).

The correspondence that is between the QoS attribute and the route configuration and that is stored in the second IAB-donor-DU, and/or the correspondence that is between the QoS attribute and the bearer configuration and that is stored in the second IAB-donor-DU may be configured by a CU of the second IAB-donor (second IAB-donor-CU) for the second IAB-donor-DU.

To enable the second IAB-donor-DU to correctly perform routing and/or bearer mapping on the FlAP message or the user plane data from the first IAB-donor-CU, the communication method 600 may further include S603.

S603: The first IAB-donor-CU obtains, from the second IAB-donor-CU, a correspondence between at least one FlAP message type and at least one QoS attribute and/or a correspondence between at least one piece of user plane data and at least one QoS attribute.

The second IAB-donor-CU may send a correspondence between at least one FlAP message type indication and the at least one QoS attribute and/or a correspondence between at least one piece of user plane data indication and the at least one QoS attribute to the first IAB-donor-CU, so that the first IAB-donor-CU obtains the correspondence between the at least one FlAP message type and the at least one QoS attribute and/or the correspondence between the at least one piece of user plane data and the at least one QoS attribute.

For example, the correspondence between the at least one F1AP message type indication and the at least one QoS attribute may be shown in Table 1.

**Table 1**

| FlAP message type indication | QoS attribute |
|---|---|
| First type | Attribute 1 |
| Second type | Attribute 2 |
| ... | ... |
| X^{th} type | Attribute X |

It should be noted that Table 1 shows merely a possible correspondence between the F1AP message type indication and the QoS attribute. The correspondence between the F1AP message type indication and the QoS attribute may be a one-to-one correspondence, a many-to-one correspondence, or a one-to-many or many-to-many correspondence. This is not limited in this embodiment of this application. The first-type FlAP message and the second-type FlAP message in Table 1 may be indicated by different FlAP message type indications. The FlAP message type indication may be indication information that occupies N bits. For example, different FlAP message types are indicated by using values of indication information that occupies one bit. If a value of the F1AP message type indication is 0, it indicates that the F1AP message type is a first-type F1AP. If a value of the F1AP message type indication is 1, it indicates that the F1AP message type is a second-type F1AP. Different QoS attributes in Table 1 may be represented by different DSCP values and/or flow label values.

Similarly, for the correspondence between the at least one piece of user plane data indication and the at least one QoS attribute, refer to the correspondence between the at least one F1AP message type indication and the at least one QoS attribute or refer to Table 1 for understanding.

Based on S603, the first IAB-donor-CU may determine, based on the correspondence that is between the FlAP message type indication and the QoS attribute and that is sent by the second IAB-donor-CU and the type of the FlAP message generated by the first IAB-donor-CU, the QoS attribute corresponding to the FlAP message.

Similarly, the first IAB-donor-CU may determine, based on the correspondence that is between the user plane data indication and the QoS attribute and that is sent by the second IAB-donor-CU and the user plane data indication corresponding to the user plane data generated by the first IAB-donor-CU, the QoS attribute corresponding to the user plane data. In this way, the second IAB-donor-DU can correctly perform routing and/or bearer mapping on the FlAP message or the user plane data from the first IAB-donor-CU based on the correspondence that is between the QoS attribute and the route configuration and that is configured by the second IAB-donor-CU for the second IAB-donor-DU, and/or the correspondence that is between the QoS attribute and the bearer configuration and that is configured by the second IAB-donor-CU for the second IAB-donor-DU.

Optionally, to enable the second IAB-donor-DU to correctly perform routing and/or bearer mapping on the FlAP message or the user plane data from the first IAB-donor-CU, the communication method 600 may further include S604.

S604: The first IAB-donor-CU sends a correspondence between at least one FlAP message type indication and at least one QoS attribute, and/or a correspondence between at least one piece of user plane data indication and at least one QoS attribute to the second IAB-donor-CU.

The second IAB-donor-CU receives the correspondence that is between the FlAP message type indication and the QoS attribute and that is sent by the second IAB-donor-CU, and may send a correspondence between the QoS attribute and the route configuration to the second IAB-donor-DU, so that the second IAB-donor-DU performs routing on the FlAP message from the first IAB-donor-CU based on the new correspondence between the QoS attribute and the route configuration.

The second IAB-donor-CU receives the correspondence that is between the FlAP message type indication and the QoS attribute and that is sent by the second IAB-donor-CU, and may send a correspondence between the QoS attribute and the bearer configuration to the second IAB-donor-DU, so that the second IAB-donor-DU performs bearer mapping on the FlAP message from the first IAB-donor-CU based on the new correspondence between the QoS attribute and the bearer configuration.

The second IAB-donor-CU receives the correspondence that is between the user plane data indication and the QoS attribute and that is sent by the second IAB-donor-CU, and may send a correspondence between the QoS attribute and the route configuration to the second IAB-donor-DU, so that the second IAB-donor-DU performs routing on the user plane data from the first IAB-donor-CU based on the new correspondence between the QoS attribute and the route configuration.

The second IAB-donor-CU receives the correspondence that is between the user plane data indication and the QoS attribute and that is sent by the second IAB-donor-CU, and may send a correspondence between the QoS attribute and the bearer configuration to the second IAB-donor-DU, so that the second IAB-donor-DU performs bearer mapping on the user plane data from the first IAB-donor-CU based on the new correspondence between the QoS attribute and the bearer configuration.

Either S603 or S604 is selected in this embodiment of this application. In other words, to enable the second IAB-donor-DU to correctly perform routing and/or bearer mapping on the FlAP message or the user plane data from the first IAB-donor-CU, it is unnecessary to perform both the two operations.

Optionally, to enable the FlAP message or the user plane data generated by the first IAB-donor-CU to be sent to the IAB-node through the F1 interface between the first IAB-donor-CU and the IAB-DU by using the second IAB-donor-DU, the communication method 600 may further include S605 or S606.

S605: The IAB-node establishes a first transport network layer association (transport network layer association, TNLA) between the first IAB-donor-CU and the IAB-DU of the IAB-node by using an IP address allocated by the first IAB-donor (the donor-CU or the donor-DU) to the IAB-node (or the IAB-DU of the IAB-node).

The IAB-node establishes the first TNLA between the first IAB-donor-CU and the IAB-DU of the IAB-node, and the first TNLA corresponds to the IP address allocated by the first IAB-donor (the IAB-donor-CU or the IAB-donor-DU) to the IAB-node (or the IAB-DU of the IAB-node).

Transport network layers may include an IP layer, a UDP layer, and an SCTP layer in FIG. 3 and FIG. 4, or may include another protocol layer. Specific protocol layers included in the transport network layers are not limited in this application. The transport network layer association is only a name of the association, and the association may also have another name. This is not limited in this application.

For example, in this case, a transmission protocol stack may be understood by replacing the IAB-donor-CU 1 in FIG. 2 or FIG. 3 with an IAB-donor-CU 2. The IAB-donor-DU 1 and the IAB-donor-CU 1 form an IAB-donor, and an IAB-donor-DU 2 and the IAB-donor-CU 2 form an IAB-donor.

For example, when the first IAB-donor-CU sends, to the IAB-node (or the IAB-DU of the IAB-node) through the first TNLA, an IP packet carrying the FlAP message or the user plane data, a source IP address of the IP packet may be set to an IP address of the first IAB-donor-CU, and a destination IP address may be set to the IP address allocated by the first IAB-donor (the donor-CU or the donor-DU) to the IAB-node (or the IAB-DU of the IAB-node).

In S605, optionally, to enable the second IAB-donor-DU to correctly determine a target node (that is, the IAB-node) of the FlAP message or user plane data, the second IAB-donor-CU needs to determine a correspondence between the IP address of the IAB-node (or the IAB-DU of the IAB-node) and a BAP address of the IAB-node, and send the determined correspondence to the second IAB-donor-DU. The IP address of the IAB-node (or the IAB-DU of the IAB-node) is allocated by the first IAB-donor (the IAB-donor-CU or the lAB-donor-DU), and the BAP address of the IAB-node is allocated by the second IAB-donor-CU. In addition, the IP address allocated by the first IAB-donor (the IAB-donor-CU or the IAB-donor-DU) to the IAB-node (or the IAB-DU of the IAB-node) may be sent by the first IAB-donor to the second IAB-donor.

For example, the second IAB-donor-DU receives the IP packet carrying the FlAP message or the user plane data. Because the destination IP address of the IP packet is the IP address allocated by the first IAB -donor (the IAB-donor-CU or the IAB-donor-DU) to the IAB-node (or the IAB-DU of the IAB-node), the second IAB-donor-DU may determine, based on the correspondence between the IP address allocated by the first IAB-donor (the IAB-donor-CU or the IAB-donor-DU) to the IAB-node (or the IAB-DU of the IAB-node) and the BAP address allocated by the second IAB-donor-CU to the IAB-node, the BAP address allocated by the second IAB-donor-CU to the IAB-node, and finally, send the FlAP message or the user plane data to an IAB-node corresponding to the BAP address.

S606: The IAB-node establishes a second TNLA between the first IAB-donor-CU and the IAB-DU of the IAB-node by using an IP address allocated by the second IAB-donor (the donor-CU or the donor-DU) to the IAB-node (or the IAB-DU of the IAB-node).

The IAB-node establishes the second TNLA between the first IAB-donor-CU and the IAB-DU of the IAB-node, and the second TNLA corresponds to the IP address allocated by the second IAB-donor (the donor-CU or the donor-DU) to the IAB-node (or the IAB-DU of the IAB-node).

For example, the second IAB-donor-CU may send, to the first IAB-donor-CU, the IP address allocated by the second IAB-donor (the donor-CU or the donor-DU) to the IAB-node (or the IAB-DU of the IAB-node), so that the first IAB-donor-CU can send and receive data through the second TNLA by using the IP address. For example, a transmitting end of an IP packet may be identified based on the IP address and a source IP address of the IP packet of the data received through the second TNLA. For another example, when the first IAB-donor-CU sends, to the IAB-node (or the IAB-DU of the IAB-node) through the second TNLA, the IP packet carrying the FlAP message or the user plane data, the source IP address of the IP packet may be set to the IP address of the first IAB-donor-CU, and the destination IP address may be set to the IP address allocated by the second IAB-donor (the donor-CU or the donor-DU) to the IAB-node (or the IAB-DU of the IAB-node).

The method in this embodiment of this application may be applied to a scenario in which the IAB-node performs inter-donor-CU migrating (inter-donor-CU migrating). To be specific, the IAB-node in this embodiment of this application may be a migrating IAB-node (for example, the IAB-node 3 in FIG. 5B) or a downstream node (for example, the IAB-node 4 in FIG. 5B) of the migrating IAB-node. The first IAB-donor may be a target IAB-donor (for example, the IAB-donor 2 in FIG. 5B). The second IAB-donor may be a source IAB-donor (for example, the IAB-donor 1 in FIG. 5B). There may be one or more parent nodes between the IAB-node and the source IAB-donor, or the IAB-node is directly connected to the source IAB-donor. There may also be one or more parent nodes between the IAB-node and the target IAB-donor, or the IAB-node is directly connected to the target IAB-donor. The F1AP message in this embodiment of this application may carry configuration information of the DU of the IAB-node under the target IAB-donor. In this way, according to the method in this embodiment, the IAB-node can obtain the configuration information under the target IAB-donor as soon as possible, to migrate from the source IAB-donor to the target IAB-donor as soon as possible.

The method in embodiments of this application may be further applied to a dual-connectivity (dual-connectivity, DC) or multi-connectivity (Multi-Connectivity, MC) scenario. To be specific, the IAB-node is connected to both the first IAB-donor and the second IAB-donor. For example, there is an F1 interface between the IAB-DU of the IAB-node and the first IAB-donor-CU and there is an F1 interface between the IAB-DU and the second IAB-donor-CU. When data between the IAB-node and the first IAB-donor cannot be sent to the IAB-node over a path between the IAB-node and the first IAB-donor, the data between the IAB-node and the first IAB-donor may be sent to the IAB-node by using the second IAB-donor. For example, a path from the first IAB-donor-CU to the IAB-node through the first IAB-donor-DU may be referred to as a primary path. A path from the first IAB-donor-CU to the IAB-node through the second IAB-donor-DU may be referred to as a backup path. The primary path and the backup path may be understood with reference to related descriptions in the embodiment corresponding to FIG. 1. In this way, according to the method in this embodiment, reliability of data transmission of the IAB-node can be improved, and a data interruption case is reduced.

In addition, for uplink transmission of the FlAP message or the user plane data of the IAB-node, refer to the following method.

The second donor-DU receives the IP packet from the IAB-node. The IP packet includes the FlAP message or the user plane data, and a destination address of the IP packet is the IP address of the first donor-CU. The second donor-DU may send the F1AP message or the user plane data to the first donor-CU in an IP routing manner. To enable the F1AP message or the user plane data of the IAB-node to be sent to the IAB-node through the F1 interface between the first IAB-donor-CU and the IAB-DU by using the second IAB-donor-DU, the method may include S605 or S606.

In addition, S605 or S606 in this embodiment of this application may be used as an independent embodiment, and is configured to establish a communication connection between the first IAB-donor-CU and the IAB-DU of the IAB-node by using the second IAB-donor-DU, to facilitate subsequent transmission of the FlAP message or the user plane data. S605 or S606 may alternatively form an embodiment together with S601 to S602, so that the F1AP message or the user plane data may be transmitted between the first IAB-donor-CU and the IAB-DU of the IAB-node by using the second IAB-donor-DU.

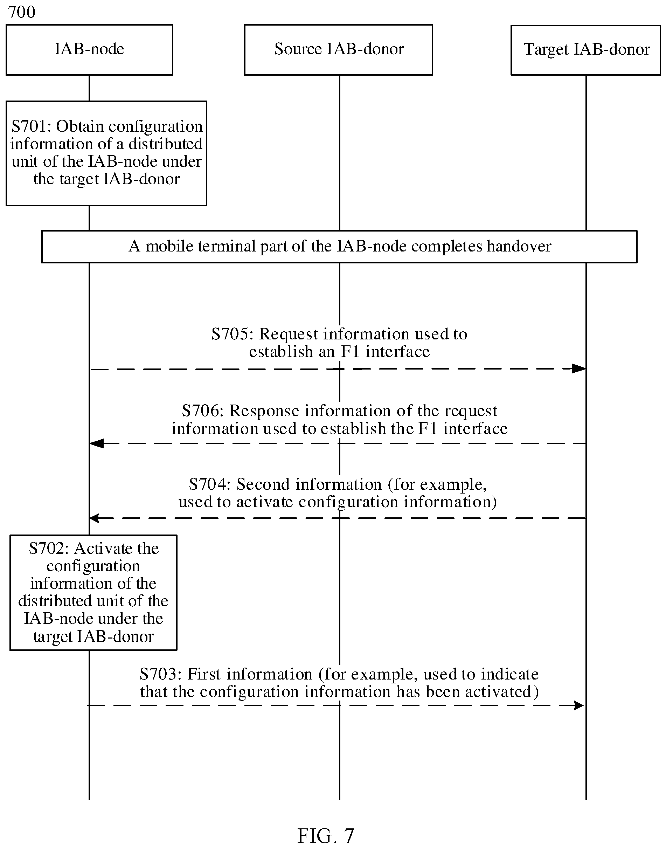

FIG. 7 shows a communication method according to an embodiment of this application. The communication method 700 includes the following steps.

S701: An IAB-node obtains configuration information of an IAB-DU of the IAB-node under a target IAB-donor.

The IAB-node may be the IAB-node 3 in FIG. 5B or a downstream node of the IAB-node 3. The configuration information of the IAB-node under the target IAB-donor is configuration information that needs to be used by the IAB-DU of the IAB-node when the IAB-node is connected to the target IAB-donor.

The configuration information of the IAB-node under the target IAB-donor may include at least one of the following: an IAB-DU identifier (ID), an IAB-DU name (name), cell information of a cell served by the IAB-node under the target IAB-donor, a synchronization signal and PBCH block (synchronization signal and physical broadcast channel block, SSB) configuration sent by the DU of the IAB-node, system information sent by the DU of the IAB-node, a public land mobile network identifier list (public land mobile network identifier list, PLMN Id List), a single network slice selection information list (Single Network Slice Selection Assistance Information list, S-NSSAI List), a PCI, a tracking area code (tracking area code, TAC), a base station identifier length (gNB ID length), an uplink frequency and a downlink frequency, and an IP address of the IAB-node.

The SSB configuration may include an SSB frequency, an SSB period, an SSB carrier spacing, an SSB offset (Offset), SSB duration (Duration), or the like. For example, the cell served by the IAB-node may include a cell served by the DU of the IAB-node or a cell deployed by the DU of the IAB-node. The cell information of the cell served by the IAB-node under the target IAB-donor may include at least one of the following: a physical cell identifier (physical cell identifier, PCI), a cell identity (Cell Identity), and a cell global identifier (cell global identifier, CGI). The cell identity includes a base station identifier and a cell local identifier The cell global identifier includes a public land mobile network identifier (public land mobile network identifier, PLMNId), a base station identifier, and a cell local identifier (cell local identifier, cellLocalld).

That the IAB-node obtains the configuration information of the IAB-DU of the IAB-node under the target IAB-donor may be implemented in any one of the following two implementations:
Implementation 1: The IAB-node may obtain the configuration information of the IAB-DU under the target IAB-donor from the target IAB-donor. For example, the target IAB-donor may send, by using the method 600, the configuration information of the IAB-DU under the target IAB-donor to the IAB-node. For example, in Implementation 1, the configuration information of the IAB-node under the candidate IAB-donor may further include indication information indicating whether a cell is activated.

In Implementation 1, the configuration information of the IAB-DU under the target IAB-donor is configured by the target IAB-donor, in other words, both the target IAB-donor and the IAB-node already know the configuration information of the IAB-DU under the target IAB-donor. Therefore, the target IAB-donor and the IAB-node may not need to exchange the configuration information of the IAB-DU under the target IAB-donor by triggering a procedure of establishing an F1 interface between the target IAB-donor-CU and the IAB-DU. This simplifies the procedure of establishing the F1 interface and improves migration efficiency.

Implementation 2: The IAB-node may receive at least one piece of configuration information from a network management device, and determines the configuration information of the IAB-DU under the target IAB-donor from the at least one piece of configuration information. For example, the network management device may determine a candidate IAB-donor of the IAB-node based on location information of the IAB-node and/or information about a neighboring cell of the IAB-node. The candidate IAB-donor may be at least one IAB-donor nearby the IAB-node. For each candidate IAB-donor, the network management device generates configuration information of the IAB-node under the candidate Refer to Table 2.

**Table 2**

| Candidate IAB-donor 1 | Configuration information 1 |
|---|---|
| Candidate IAB-donor 2 | Configuration information 2 |
| ... | ... |
| Candidate IAB-donor X | Configuration information X |

The network management device may send, to the IAB-node, configuration information corresponding to X (where X is a positive integer greater than or equal to 1) candidate IAB-donors. The IAB-node may determine the configuration information of the IAB-node under the candidate IAB-donor from X pieces of configuration information based on the target IAB-donor.

In Implementation 2, because the target IAB-donor-CU does not know the configuration information of the IAB-DU under the target IAB-donor, a procedure of establishing an F1 interface between the target IAB-donor-CU and the IAB-DU needs to be triggered to exchange the configuration information of the IAB-DU under the target IAB-donor.

For example, the network management device may be an operation, administration and maintenance (operation, administration and maintenance, OAM) network element. The network management device may include an element management system (element management system, EMS) and a network management system (network management system, NMS). The network management device may be a functional network element located in a 5G core network (5G Core, 5GC), or the network management device may be a functional network element deployed in a backbone network behind a 5G core network. A specific deployment location of the network management device is not limited in this application.

S702: After an IAB-MT of the IAB-node is handed over from a source IAB-donor to the target IAB-donor, the IAB-node activates the configuration information of the IAB-DU under the target IAB-donor.

That the IAB-node activates the configuration information of the IAB-DU under the target IAB-donor may mean that the IAB-node activates at least one cell in the configuration information of the IAB-DU under the target IAB-donor. Activating a cell may refer to activating a related configuration of the cell, for example, a cell identity or a CGI.

According to this method, the IAB-node may not make the configuration information of the DU of the IAB-node under the target IAB-donor take effect during handover of the MT part, to reduce a case in which resource allocation is not coordinated between the MT of the IAB-node and the DU of the IAB-node when the MT of the IAB-node is still connected to the source IAB-donor. For example, because a resource of the IAB-MT and a resource of the IAB-DU are configured by the source IAB-donor in a unified manner, during handover of the IAB-MT, the resource of the IAB-MT is configured by the source IAB-donor. If the configuration information of the DU of the IAB-node under the target IAB-donor takes effect in this case, the resource of the IAB-MT is configured by the source IAB-donor, and the resource of the IAB-DU is configured by the target IAB-donor. Consequently, uncoordinated resource allocation between the IAB-MT and the IAB-DU may occur.

After the IAB-MT of the IAB-node is handed over from the source IAB-donor to the target IAB-donor, the configuration information may be activated by using either of the following two methods:
Method 1: The IAB-node automatically activates the configuration information of the IAB-DU under the target IAB-donor. For example, after the IAB-MT successfully accesses the target IAB-donor, the IAB-node may automatically activate the configuration information of the IAB-DU under the target IAB-donor. For example, in Method 1, the IAB-node may automatically activate, based on the indication information indicating whether a cell in the configuration information of the IAB-node under the target IAB-donor is activated, the configuration information of the IAB-DU under the target IAB-donor (activate the cell of the IAB-DU under the target IAB-donor) after the IAB-MT successfully accesses the target IAB-donor.

In Method 1, to enable the target IAB-donor to know that the configuration information of the IAB-DU under the target IAB-donor has been activated, optionally, Method 1 includes S703.

S703: The IAB-node sends first information to the target IAB-donor, and the first information indicates that the configuration information of the IAB-DU under the target IAB-donor has been activated.

Method 2 is further divided into the following two cases:
(1) The IAB-node obtains the configuration information of the IAB-DU under the target IAB-donor from the target IAB-donor, and Method 2 includes S704.

S704: The IAB-node receives second information from the target IAB-donor, and the second information is used to activate the configuration information.

After receiving the second information, the IAB-node activates the configuration information of the IAB-DU under the target IAB-donor. Activating the configuration information of the IAB-DU under the target IAB-donor may be considered as activating configuration information corresponding to a cell in the configuration information of the IAB-DU under the target IAB-donor.

For example, if the configuration information of the IAB-node under the target IAB-donor does not include the indication information indicating whether the cell is activated, the second information may include indication information indicating to activate at least one cell in the configuration information of the IAB-DU under the target IAB-donor.

For example, if the configuration information of the IAB-node under the target IAB-donor includes the indication information indicating whether the cell is activated, the IAB-node may activate, based on the indication information indicating whether the cell is activated, the configuration information of the IAB-DU under the target IAB-donor after receiving the second information.

The second information may be carried in a configuration update message, for example, a GNB-CU CONFIGURATION UPDATE message, sent by the target IAB-donor (or the target IAB-donor-CU) to the IAB-node. For understanding of the GNB-CU CONFIGURATION UPDATE message, refer to section 9.2.1.10 in 3GPP TS 38.473 V16.1.0. Alternatively, the second information may be carried in a configuration update acknowledgment message, for example, a GNB-DU CONFIGURATION UPDATE ACKNOWLEDGE message, sent by the target IAB-donor (or the target IAB-donor-CU) to the IAB-node. For understanding of the GNB-DU CONFIGURATION UPDATE ACKNOWLEDGE message, refer to section 9.2.1.8 in 3GPP TS 38.473 V16.1.0.

(2) When the IAB-node determines the configuration information of the IAB-DU under the target IAB-donor from the at least one piece of configuration information from the network management device, Method 2 includes S705 and S706.

S705: The IAB-node sends, to the target IAB-donor, request information used to establish (or re-establish) an F1 interface, and the request information includes the configuration information of the IAB-DU under the target IAB-donor.

The F1 interface is a communication interface between the IAB-DU of the IAB-node and the IAB-donor-CU of the target IAB-donor.

For example, the configuration information of the IAB-node under the target IAB-donor may further include indication information indicating whether a cell needs to be activated.

For example, the IAB-node may send, to the target IAB-donor through the first TNLA or the second TNLA, the request information used to establish (or re-establish) the F1 interface. The first TNLA is a TNLA established between the target IAB-donor-CU and the IAB-DU by the IAB-node by using an IP address allocated by the target IAB-donor (the donor-CU or the donor-DU) to the IAB-node (or the IAB-DU). The second TNLA is a TNLA established between the target IAB-donor-CU and the IAB-DU by the IAB-node by using an IP address allocated by the source IAB-donor (the donor-CU or the donor-DU) to the IAB-node (or the IAB-DU).

S706: The target IAB-donor sends response information of the request information to the IAB-node.

If the target IAB-donor sends the response information of the request information to the IAB-node before the IAB-MT of the IAB-node is handed over from the source IAB-donor to the target IAB-donor, the response information is not used to activate the configuration information of the IAB-DU under the target IAB-donor. For example, the response information includes indication information not used to activate the configuration information of the IAB-DU under the target IAB-donor, or the response information includes deactivation indication information used to deactivate the configuration information of the IAB-DU under the target IAB-donor. Specifically, the deactivation indication information may be indication information used to deactivate all cells of the IAB-DU under the target IAB-donor, and the response information does not include activation indication information used to activate all cells of the IAB-DU under the target IAB-donor.

In this design, before the IAB-MT completes handover, the configuration information of the IAB-DU under the target IAB-donor may not be mistakenly activated by the response information of the request information. Further, after the IAB-MT of the IAB-node is handed over from the source IAB-donor to the target IAB-donor, S704 may be performed to activate the configuration information of the IAB-DU under the target IAB-donor.

If the target IAB-donor sends the response information of the request information to the IAB-node after the IAB-MT of the IAB-node is handed over from the source IAB-donor to the target IAB-donor, the response information is used to activate the configuration information of the IAB-DU under the target IAB-donor. For example, the response information includes activation indication information used to activate the configuration information of the IAB-DU under the target IAB-donor, or the response information includes activation indication information used to activate at least one cell in the configuration information of the IAB-DU in the target IAB-donor. For example, the activation indication information may be generated by the target IAB-donor based on the indication information indicating whether the cell needs to be activated.

For example, the response information may further include at least one of the following: information identifying the target IAB-donor, an RRC version supported by the target IAB-donor-CU, transport layer address information of the target IAB-donor-CU, and a synchronization signal block transmission configuration (synchronization signal block transmission configuration, STC) of the IAB-DU of the IAB-node.

In this design, the response information of the request information may be reused to activate the configuration information of the DU of the IAB-node under the target IAB-donor, to reduce air interface overheads.

For example, the IAB-node may send, to the target IAB-donor through the first TNLA, the request information used to establish (or re-establish) the F1 interface, and receive, through the first TNLA, the response information of the request information sent by the target IAB-donor.

Optionally, the IAB-node may send, to the target IAB-donor through the second TNLA, the request information used to establish (or re-establish) the F 1 interface, and receive, through the second TNLA, the response information of the request information sent by the target IAB-donor.

Optionally, the IAB-node may send, to the target IAB-donor through the second TNLA, the request information used to establish (or re-establish) the F 1 interface, and receive, through the first TNLA, the response information of the request information sent by the target IAB-donor.

The first TNLA is a TNLA established between the target IAB-donor-CU and the IAB-DU by the IAB-node by using an IP address allocated by the target IAB-donor (the donor-CU or the donor-DU) to the IAB-node (or the IAB-DU). The second TNLA is a TNLA established between the target IAB-donor-CU and the IAB-DU by the IAB-node by using an IP address allocated by the source IAB-donor (the donor-CU or the donor-DU) to the IAB-node (or the IAB-DU).

For example, the target IAB-donor may exchange at least one of the request information used to establish (or re-establish) the F1 interface, the response information of the request information, or the second information between the target IAB-donor and the IAB-node by using the method 600.

Based on the foregoing similar technical concepts, an embodiment of this application provides a communication apparatus. The apparatus may be the IAB-donor-CU, the IAB-donor-DU, the IAB-donor, or the IAB-node in any possible design solution of the method 600 or 700 in the foregoing embodiments. The communication apparatus includes at least one corresponding unit, in the communication method provided in the method 600 or 700, configured to perform method steps or operations or behavior performed by the IAB-donor-CU, the IAB-donor-DU, the IAB-donor, or the IAB-node. The at least one unit may be disposed in a one-to-one correspondence with method steps or operations or behavior performed by the IAB-donor-CU, the IAB-donor-DU, the IAB-donor, or the IAB-node. These units may be implemented by using a computer program, may be implemented by using a hardware circuit, or may be implemented by using a computer program in combination with a hardware circuit.

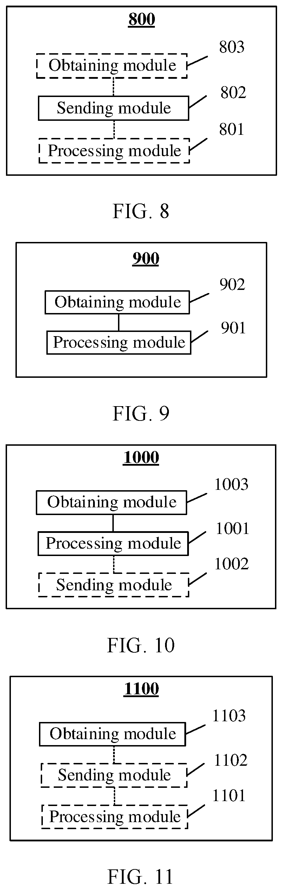

FIG. 8 is a schematic block diagram of a communication apparatus 800 according to an embodiment of this application. The communication apparatus 800 may be applied to an IAB-donor-CU. The following describes in detail a structure and a function of the communication apparatus 800 in different designs. Although names of modules in different designs are the same, the structures and functions can be different.

Design 1: The communication apparatus 800 may include a processing module 801 and a sending module 802. The processing module 801 is configured to determine a QoS attribute corresponding to an F1 application protocol (F1 application protocol, F1AP) message or a QoS attribute corresponding to user plane data, where an F1 interface is a communication interface between a first IAB-donor-CU and a DU of an IAB-node. The sending module 802 is configured to send the FlAP message and the QoS attribute corresponding to the FlAP message to a second IAB-donor-DU, or send the user plane data and the QoS attribute corresponding to the user plane data to a second IAB-donor-DU.

Specifically, the processing module 801 is configured to determine, based on a correspondence between an FlAP message type and the QoS attribute, the QoS attribute corresponding to the FlAP message. The correspondence is obtained by the first IAB-donor-CU from a second IAB-donor-CU. The processing module 801 is configured to determine, based on a correspondence between the user plane data and the QoS attribute, the QoS attribute corresponding to the user plane data. The correspondence is obtained by the first IAB-donor-CU from the second IAB-donor-CU.

Further, the sending module 802 is further configured to send an F1AP message type indication and the QoS attribute to the second IAB-donor-CU, where there is a correspondence between the FlAP message type indication and the QoS attribute, or the sending module 802 is further configured to send a user plane data indication and the QoS attribute to the second IAB-donor-CU, where there is a correspondence between the user plane data indication and the QoS attribute.

The sending module 802 is specifically configured to send the FlAP message or the user plane data to the IAB-node through a first transport network layer association TNLA between the first IAB-donor-CU and the DU of the IAB-node, where the first TNLA corresponds to an internet protocol IP address allocated by the first IAB-donor to the IAB-node. The sending module 802 is specifically configured to send the F1AP message or the user plane data to the IAB-node through a second transport network layer association TNLA between the first IAB-donor-CU and the DU of the IAB-node, where the second TNLA corresponds to an internet protocol IP address allocated by the second IAB-donor to the IAB-node.

The communication apparatus 800 may further include an obtaining module 803, configured to receive, from the second IAB-donor-CU, the IP address allocated by the second IAB-donor to the IAB-node. Further, the processing module 801 uses the IP address allocated by the second IAB-donor to the IAB-node, so that the sending module 802 sends the F1AP message or the user plane data to the IAB-node through the second TNLA.

The F1AP message type includes a user equipment associated type and a non-user equipment associated type. The user plane data indication is a GTP-U tunnel identifier or an IP address of the F1 interface. The QoS attribute is a differentiated services code point and/or a flow label. The FlAP message carries configuration information of the DU of the IAB-node under the first IAB-donor.

Design 2: The communication apparatus 800 may include a sending module 802. The sending module 802 is configured to send an F 1 application protocol (F1 application protocol, F1AP) message type indication and a QoS attribute to a first IAB-donor-CU, where there is a correspondence between the FlAP message type indication and the QoS attribute. The correspondence is used to determine a QoS attribute corresponding to an F1AP message of the first IAB-donor-CU, and an F1 interface is a communication interface between the first IAB-donor-CU and a distributed unit DU of an IAB-node. Alternatively, the sending module 802 is configured to send a user plane data indication and a QoS attribute to a first IAB-donor-CU, where there is a correspondence between the user plane data indication and the QoS attribute, and the correspondence is used to determine a QoS attribute corresponding to user plane data of the first IAB-donor-CU.

The sending module 802 is further configured to send, to the first IAB-donor-CU, an IP address allocated by a second IAB-donor to the IAB-node, where the IP address is used to transmit the F1AP message or the user plane data.

Further, the sending module 802 is further configured to send, to a second IAB-donor-DU, an IP address allocated by the first IAB-donor to the IAB-node and a BAP address allocated by the second IAB-donor to the IAB-node. There is a correspondence between the IP address and the BAP address, and the correspondence is used to determine a BAP address of a target node corresponding to the F1AP message or the user plane data. The F1 interface is a communication interface between the first IAB-donor-CU and the DU of the IAB-node.

The F1AP message type includes a user equipment associated type and a non-user equipment associated type. The user plane data indication is a general packet radio service tunneling protocol for the user plane GTP-U tunnel identifier or an IP address of the F1 interface. The QoS attribute is a differentiated services code point DSCP and/or a flow label (flow label). The FlAP message carries configuration information of the DU of the IAB-node under the first IAB-donor.

Design 3: The communication apparatus 800 may include a processing module 801, a sending module 802, and an obtaining module 803. The obtaining module 803 is configured to receive an F1 application protocol (F1 application protocol, F1AP) message type indication and a QoS attribute from a first IAB-donor-CU, where there is a correspondence between the F1AP message type indication and the QoS attribute, where an F1 interface is a communication interface between the first IAB-donor-CU and a distributed unit DU of an IAB-node. Alternatively, the obtaining module 803 is configured to receive a user plane data indication and a QoS attribute from a first IAB-donor-CU, where there is a correspondence between the user plane data indication and the QoS attribute.

The processing module 801 is configured to enable the sending module 802 to send, based on the correspondence, a route configuration and a bearer configuration that correspond to the QoS attribute to a second IAB-donor-DU.

Further, the sending module 802 is further configured to send, to the second IAB-donor-DU, an IP address allocated by the first IAB-donor to the IAB-node and a BAP address allocated by the second IAB-donor to the IAB-node. There is a correspondence between the IP address and the BAP address, and the correspondence is used to determine a BAP address of a target node corresponding to the FlAP message or the user plane data. The F1 interface is a communication interface between the first IAB-donor-CU and the DU of the IAB-node.

The F1AP message type includes a user equipment associated type and a non-user equipment associated type. The user plane data indication is a general packet radio service tunneling protocol for the user plane GTP-U tunnel identifier or an IP address of the F1 interface. The QoS attribute is a differentiated services code point DSCP and/or a flow label flow label. The FlAP message carries configuration information of the DU of the IAB-node under the first IAB-donor.

FIG. 9 is a schematic block diagram of a communication apparatus 900 according to an embodiment of this application. The communication apparatus 900 may be applied to an IAB-donor-DU. The following describes in detail a structure and a function of the communication apparatus 900.

The communication apparatus 900 may include a processing module 901 and an obtaining module 902. The obtaining module 902 is configured to receive an F1 application protocol (F1 application protocol, F1AP) and a QoS attribute corresponding to the FlAP message from a first IAB-donor-CU, or receive user plane data and a QoS attribute corresponding to the user plane data from a first IAB-donor-CU, where an F1 interface is a communication interface between the first IAB-donor-CU and a DU of an IAB-node.

The processing module 901 is configured to perform routing and bearer mapping on the FlAP message or the user plane data based on a route configuration and a bearer configuration that correspond to the QoS attribute.

Further, the obtaining module 902 is further configured to receive, from a second IAB-donor-CU, an internet protocol IP address allocated by the first IAB-donor to the IAB-node and a BAP address allocated by the second IAB-donor to the IAB-node, where there is a correspondence between the IP address and the BAP address. The processing module 901 is further configured to determine, based on the correspondence, a BAP address of a target node corresponding to the F1AP message or the user plane data, where the F1 interface is a communication interface between the first IAB-donor-CU and the DU of the IAB-node.

An FlAP message type may include a user equipment associated type and a non-user equipment associated type. A user plane data indication is a GTP-U tunnel identifier or an IP address of the F1 interface. The QoS attribute is a differentiated services code point and/or a flow label. The F1AP message carries configuration information of the DU of the IAB-node under the first IAB-donor.

FIG. 10 is a schematic block diagram of a communication apparatus 1000 according to an embodiment of this application. The communication apparatus 1000 may be applied to an IAB-node. The following describes in detail a structure and a function of the communication apparatus 1000 in different designs. Although names of modules in different designs are the same, the structures and functions can be different.

Design 1: The communication apparatus 1000 may include a processing module 1001 and an obtaining module 1003. The processing module 1001 is further configured to establish a first TNLA between a first IAB-donor-CU and a DU of an IAB-node by using an IP address allocated by a second IAB-donor to the IAB-node. The obtaining module 1003 is configured to receive an F 1 application protocol (F 1 application protocol, F1AP) message or user plane data from the first IAB-donor-CU through the first TNLA, where an F1 interface is a communication interface between the first IAB-donor-CU and the DU of the IAB-node.

An FlAP message type includes a user equipment associated type and a non-user equipment associated type. A user plane data indication is a GTP-U tunnel identifier or an IP address of the F1 interface. A QoS attribute is a differentiated services code point and/or a flow label. The F1AP message carries configuration information of the DU of the IAB-node under the first IAB-donor.

Design 2: The communication apparatus 1000 may include a processing module 1001 and an obtaining module 1003. The obtaining module 1003 is configured to obtain configuration information of a distributed unit DU of an IAB-node under a target IAB-donor. The processing module 1001 is configured to activate the configuration information after an MT of the IAB-node is handed over from a source IAB-donor to the target IAB-donor.

Specifically, the obtaining module 1003 is configured to receive the configuration information from the target IAB-donor.

Further, the obtaining module 1003 is further configured to receive second information from the target IAB-donor, where the second information is used to activate the configuration information. The processing module 1001 is specifically configured to activate the configuration information based on the second information.

The obtaining module 1003 is specifically configured to receive at least one piece of configuration information from a network management device. The processing module 1001 is further configured to enable the obtaining module 1003 to determine the configuration information from the at least one piece of configuration information.

In addition, the communication apparatus 1000 may further include a sending module 1002. The sending module 1002 is configured to send, to the target IAB-donor, request information used to establish an F1 interface, where the request information includes the configuration information of the DU of the IAB-node under the target IAB-donor. The obtaining module 1003 is configured to receive response information of the request information from the target IAB-donor.

Further, the processing module 1001 is configured to establish a first TNLA between a target IAB-donor-CU and the DU of the IAB-node by using an IP address allocated by the target IAB-donor to the IAB-node. The sending module 1002 is specifically configured to send, to the target IAB-donor through the first TNLA, the request information used to establish the F1 interface. The obtaining module 1003 is specifically configured to receive the response information of the request information from the target IAB-donor through the first TNLA.

Optionally, before the mobile terminal MT of the IAB-node is handed over from the source IAB-donor to the target IAB-donor, the processing module 1001 is further configured to establish a second transport network layer association TNLA between the target IAB-donor-CU and the DU of the IAB-node by using an IP address allocated by the source IAB-donor to the IAB-node. The sending module 1002 is specifically configured to send, to the target IAB-donor through the second TNLA, the request information used to establish the F1 interface. The obtaining module 1003 is specifically configured to receive the response information of the request information from the target IAB-donor through the second TNLA.

For example, before the MT of the IAB-node is handed over from the source IAB-donor to the target IAB-donor, the processing module 1001 is further configured to establish the second transport network layer association TNLA between the target IAB-donor-CU and the DU of the IAB-node by using the IP address allocated by the source IAB-donor to the IAB-node. The sending module 1002 is specifically configured to send, to the target IAB-donor through the second TNLA, the request information used to establish the F 1 interface.

Further, after the mobile terminal MT of the IAB-node is handed over from the source IAB-donor to the target IAB-donor, the processing module 1001 is further configured to establish the first TNLA between the target IAB-donor-CU and the DU of the IAB-node by using the IP address allocated by the target IAB-donor to the IAB-node. The obtaining module 1003 is specifically configured to receive the response information of the request information from the target IAB-donor through the first TNLA.

If the obtaining module 1003 receives the response information of the request information from the target IAB-donor before the MT of the IAB-node is handed over from the source IAB-donor to the target IAB-donor, the response information is used to deactivate the configuration information of the DU of the IAB-node under the target IAB-donor.

Alternatively, if the obtaining module 1003 receives the response information of the request information from the target IAB-donor after the MT of the IAB-node is handed over from the source IAB-donor to the target IAB-donor, the response information is used to activate the configuration information of the DU of the IAB-node under the target IAB-donor.

Specifically, the processing module 1001 is configured to automatically activate the configuration information. Further, the sending module 1002 is further configured to send first information to the target IAB-donor, where the first information indicates that the configuration information has been activated.

An embodiment of this application provides a communication apparatus 1100. The following describes in detail a structure and a function of the communication apparatus 1100. FIG. 11 is a schematic block diagram of a communication apparatus 1100 according to an embodiment of this application. The communication apparatus 1100 may be applied to an IAB-donor. The following describes in detail a structure and a function of the communication apparatus 1100 in different designs. Although names of modules in different designs are the same, the structures and functions can be different.

Design 1: The communication apparatus 1100 may include a processing module 1001 and an obtaining module 1103. The obtaining module 1103 is configured to receive first information from an IAB-node, where the first information indicates that configuration information of a distributed unit DU of the IAB-node under a target IAB-donor has been activated. The processing module 1001 is configured to determine, based on the first information, that the configuration information has been activated.

Design 2: The communication apparatus 1100 may include a sending module 1102 and an obtaining module 1103. The obtaining module 1103 is configured to receive, from an IAB-node, request information used to establish an F1 interface.

The sending module 1102 is configured to send response information to the IAB-node before an MT of the IAB-node is handed over from a source IAB-donor to a target IAB-donor, where the response information is used to deactivate configuration information of a DU of the IAB-node under the target IAB-donor. Alternatively, the sending module 1102 is configured to send response information to the IAB-node after a mobile terminal MT of the IAB-node is handed over from a source IAB-donor to a target IAB-donor, where the response information is used to activate configuration information of a DU of the IAB-node under the target IAB-donor.

Specifically, the obtaining module 1103 is configured to receive, from the IAB-node through a second transport network layer association TNLA between a target IAB-donor-CU and the DU of the IAB-node, the request information used to establish the F1 interface, where the second TNLA corresponds to an IP address allocated by the source IAB-donor to the IAB-node. The sending module 1102 is configured to send the response information of the request information to the IAB-node through the second TNLA.

Specifically, the obtaining module 1103 is specifically configured to receive, from the IAB-node through a first TNLA between the target IAB-donor-CU and the DU of the IAB-node, the request information used to establish the F1 interface, where the first TNLA corresponds to an IP address allocated by the target IAB-donor to the IAB-node. The sending module 1102 is specifically configured to send the response information of the request information to the IAB-node through the first TNLA.

Specifically, the obtaining module 1103 is configured to: before the MT of the IAB-node is handed over from the source IAB-donor to the target IAB-donor, receive, from the IAB-node through the second transport network layer association TNLA between the target IAB-donor-CU and the DU of the IAB-node, the request information used to establish the F1 interface, where the second TNLA corresponds to an internet protocol IP address allocated by the source IAB-donor to the IAB-node.

Specifically, the sending module 1102 is configured to: after the MT of the IAB-node is handed over from the source IAB-donor to the target IAB-donor, send the response information of the request information to the IAB-node through the first TNLA between the target IAB-donor-CU and the DU of the IAB-node, where the first TNLA corresponds to an IP address allocated by the target IAB-donor to the IAB-node.

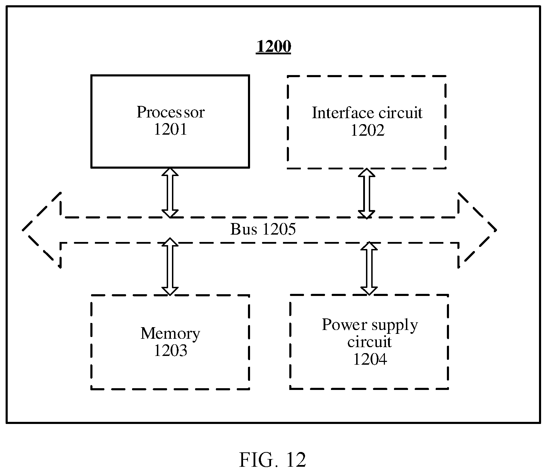

Based on a same technical concept, an embodiment of this application further provides an apparatus 1200. The following specifically describes a structure and a function of the apparatus 1200 with reference to a schematic block diagram of the apparatus 1200 in FIG. 12. The apparatus may include at least one processor 1201, and optionally, further includes an interface circuit 1202. When related program instructions are executed in the at least one processor 1201, the apparatus 1200 may be enabled to implement the communication method provided in any one of the foregoing embodiments and the possible designs thereof. Alternatively, the processor 1201 is configured to implement, by using a logic circuit or executing code instructions, the communication method provided in any one of the foregoing embodiments and the possible designs thereof. The interface circuit 1202 may be configured to receive the program instructions and transmit the program instructions to the processor. Alternatively, the interface circuit 1202 may be used by the apparatus 1200 to communicate and interact with another communication device, for example, exchange control signaling and/or service data with another communication device. For example, the interface circuit 1202 may be configured to receive a signal from another apparatus different from the apparatus 1200, and transmit the signal to the processor 1201; or send a signal from the processor 1201 to another communication apparatus different from the apparatus 1200. The interface circuit 1202 may be a code and/or data read and write interface circuit, or the interface circuit 1202 may be a signal transmission interface circuit between a communication processor and a transceiver. Optionally, the communication apparatus 1200 may further include at least one memory 1203, and the memory 1203 may be configured to store the related program instructions and/or data that are/is required. Optionally, the apparatus 1200 may further include a power supply circuit 1204. The power supply circuit 1204 may be configured to supply power to the processor 1201. The power supply circuit 1204 and the processor 1201 may be located in a same chip, or the power supply circuit 1204 may be located in a chip other than a chip in which the processor 1201 is located. Optionally, the apparatus 1200 may further include a bus 1205, and parts in the apparatus 1200 may be interconnected through the bus 1205.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or the processor may be any conventional processor or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The power supply circuit in embodiments of this application includes but is not limited to at least one of the following: a power supply line, a power supply subsystem, a power management chip, a power consumption management processor, or a power consumption management control circuit.

A transceiver apparatus, an interface circuit, or the transceiver in embodiments of this application may include a separate transmitter and/or a separate receiver, or the transmitter and the receiver may be integrated. The transceiver apparatus, the interface circuit, or the transceiver may work under an indication of a corresponding processor. Optionally, the transmitter may correspond to a transmitter machine in a physical device, and the receiver may correspond to a receiver machine in the physical device.

It may be clearly understood by a person skilled in the art that, for the purpose of convenient and brief description, division of the foregoing functional modules is used as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In embodiments of this application, it should be understood that the disclosed systems, apparatuses, and methods may be implemented in other manners. For example, the described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

A person of ordinary skill in the art may be aware that, in combination with examples described in embodiments disclosed in this specification, units or algorithm operations may be implemented by hardware, software, or a combination of software and hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In this application, "implemented by software" may mean that a processor reads and executes program instructions stored in a memory to implement a function corresponding to the foregoing module or unit. The processor is a processing circuit that has a function of executing the program instructions, and includes but is not limited to at least one of the following: types of processing circuits that can execute the program instructions such as a central processing unit (central processing unit, CPU), a microprocessor, a digital signal processor (digital signal processor, DSP), a microcontroller (microcontroller unit, MCU), or an artificial intelligence processor. In some other embodiments, the processor may further include a circuit that has another processing function (for example, a hardware circuit, a bus, and an interface circuit that are used for hardware acceleration). The processor may be presented in a form of an integrated chip. For example, the processor may be presented in a form of an integrated chip whose processing function includes only a function of executing software instructions; or the processor may be presented in a form of a system-on-a-chip (system-on-a-chip, SoC). To be specific, on one chip, in addition to the processing circuit (which is usually referred to as a "core") that can execute the program instructions, another hardware circuit configured to implement a specific function is further included (where certainly, the hardware circuit may also be independently implemented based on an ASIC or an FPGA). Correspondingly, in addition to the function of executing software instructions, processing functions may further include various hardware acceleration functions (such as AI computing, encoding and decoding, and compression and decompression).

In this application, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an ASIC, or a programmable logic device (programmable logic device, PLD). The PLD may further include an FPGA, a complex programmable logic device (complex programmable logic device, CPLD), or the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a system-on-a-programmable-chip (system-on-a-programmable-chip, SoPC).

It should be noted that, when this application is implemented by using software, hardware, or a combination of software and hardware, this application may be implemented by using different software and hardware, which is not limited to only one type of software or hardware. For example, one of the modules or units may be implemented through the CPU, and another module or unit may be implemented through the DSP. Similarly, when hardware is used for implementation, one of the modules or units may be implemented through the ASIC, and another module or unit may be implemented through the FPGA. Certainly, it is also not specified that some or all modules or units are implemented by using a same type of software (for example, through the CPU) or a same type of hardware (for example, through the ASIC). In addition, a person skilled in the art may know that, software usually has better flexibility but poorer performance than hardware, and hardware is exactly opposite. Therefore, a person skilled in the art may select software, hardware, or a combination thereof for implementation based on an actual requirement.

In the foregoing embodiments, the description of each embodiment has respective focuses. For a part that is not described in detail in an embodiment, refer to related descriptions in other embodiments. Embodiments of this application may be combined, or some technical features in embodiments may be decoupled from specific embodiments and combined with a conventional technology, to resolve the technical problem in embodiments of this application.

In embodiments of this application, the units described as separate components may or may not be physically separate, and components displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and may include several instructions for instructing a computer device, for example, a personal computer, a server, or a network device, or a processor (processor) to perform all or a part of the operations of the methods described in embodiments of this application. The foregoing storage medium may include any medium or computer-readable storage medium that can store program code, such as a USB flash drive, a removable hard disk, a read-only memory (read-only memory, ROM), a random access memory (random access memory, RAM), a magnetic disk, or an optical disc.

In descriptions of this application, terms such as "first", "second", "S201", or " S202" are merely used for distinguishing and description and for ease of organizing this article. Different sequences or numbers do not have specific technical meanings, and cannot be understood as indicating or implying relative importance, or indicating or implying an execution sequence of operations.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In the descriptions of this application, "at least one" represents one or more. "At least one of the following: A, B, and C is included" may indicate that A is included, B is included, C is included, A and B are included, A and C are included, B and C are included, or A, B and C are included.

The solutions provided in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system, a new radio (new radio, NR) system, or another network system that can be used to provide a mobile communication service. This is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
determining, by a central unit CU of a first integrated access and backhaul IAB-donor (first IAB-donor-CU), a quality of service QoS attribute corresponding to an F1 application protocol F1AP message or a quality of service QoS attribute corresponding to user plane data, wherein an F1 interface is a communication interface between the first IAB-donor-CU and a distributed unit DU of an IAB-node; and
sending, by the first IAB-donor-CU, the F1AP message and the QoS attribute corresponding to the F1AP message to a distributed unit DU of a second IAB-donor (second IAB-donor-DU), or sending the user plane data and the QoS attribute corresponding to the user plane data to a distributed unit DU of a second IAB-donor (second IAB-donor-DU).

2. The method according to claim 1, wherein the determining, by a first IAB-donor-CU, a quality of service QoS attribute corresponding to an F1AP message comprises:
determining, by the first IAB-donor-CU based on a correspondence between an F1AP message type and the QoS attribute, the QoS attribute corresponding to the F1AP message; or
determining, by the first IAB-donor-CU based on a correspondence between the user plane data and the QoS attribute, the QoS attribute corresponding to the user plane data, wherein
the correspondence is obtained by the first IAB-donor-CU from a CU of the second IAB-donor (second IAB-donor-CU).

3. The method according to claim 1, wherein the method comprises:
sending, by the first IAB-donor-CU, an FlAP message type indication and the QoS attribute to a second IAB-donor-CU, wherein there is a correspondence between the F1AP message type indication and the QoS attribute; or
sending, by the first IAB-donor-CU, a user plane data indication and the QoS attribute to a second IAB-donor-CU, wherein there is a correspondence between the user plane data indication and the QoS attribute.

4. The method according to any one of claims 1 to 3, wherein the method comprises:
sending, by the first IAB-donor-CU, the FlAP message or the user plane data to the IAB-node through a first transport network layer association TNLA between the first IAB-donor-CU and the DU of the IAB-node, wherein the first TNLA corresponds to an internet protocol IP address allocated by the first IAB-donor to the IAB-node; or
sending, by the first IAB-donor-CU, the F1AP message or the user plane data to the IAB-node through a second transport network layer association TNLA between the first IAB-donor-CU and the DU of the IAB-node, wherein the second TNLA corresponds to an internet protocol IP address allocated by the second IAB-donor to the IAB-node.

5. The method according to claim 4, wherein the method further comprises:
receiving, by the first IAB-donor-CU, the IP address that is from the second IAB-donor-CU and that is allocated by the second IAB-donor to the IAB-node; and
the sending, by the first IAB-donor-CU, the FlAP message or the user plane data to the IAB-node through a second transport network layer association TNLA between the first IAB-donor-CU and the DU of the IAB-node comprises:
sending, by the first IAB-donor-CU, the F1AP message or the user plane data to the IAB-node through the second TNLA by using the IP address allocated by the second IAB-donor to the IAB-node.

6. A communication method, comprising:
sending, by a second integrated access and backhaul IAB-donor-central unit CU, an F1 application protocol F1AP message type indication and a quality of service QoS attribute to a first IAB-donor-CU, wherein there is a correspondence between the FlAP message type indication and the QoS attribute, the correspondence is used to determine a QoS attribute corresponding to an FlAP message of the first IAB-donor-CU, and an F1 interface is a communication interface between the first IAB-donor-CU and a distributed unit DU of an IAB-node; or
sending, by a second integrated access and backhaul IAB-donor-central unit CU, a user plane data indication and a QoS attribute to a first IAB-donor-CU, wherein there is a correspondence between the user plane data indication and the QoS attribute, and the correspondence is used to determine a QoS attribute corresponding to user plane data of the first IAB-donor-CU.

7. The method according to claim 6, wherein the method further comprises:
sending, by the second IAB-donor-CU to the first IAB-donor-CU, an IP address allocated by the second IAB-donor to the IAB-node, wherein the IP address is used to transmit the F1AP message or the user plane data.

8. A communication method, comprising:
receiving, by a second integrated access and backhaul IAB-donor-central unit CU, an F1 application protocol FlAP message type indication and a quality of service QoS attribute from a first IAB-donor-CU, wherein there is a correspondence between the FlAP message type indication and the QoS attribute, and an F1 interface is a communication interface between the first IAB-donor-CU and a distributed unit DU of an IAB-node; or
receiving, by a second integrated access and backhaul IAB-donor-central unit CU, a user plane data indication and a QoS attribute from a first IAB-donor-CU, wherein there is a correspondence between the user plane data indication and the QoS attribute; and
sending, by the second IAB-donor-CU based on the correspondence, a route configuration and a bearer configuration that correspond to the QoS attribute to a second IAB-donor-DU.

9. The method according to any one of claims 6 to 8, wherein the method comprises:
sending, by the second IAB-donor-CU to the second IAB-donor-DU, an internet protocol IP address allocated by the first IAB-donor to the IAB-node and a backhaul adaptation protocol BAP address allocated by the second IAB-donor to the IAB-node, wherein there is a correspondence between the IP address and the BAP address, and the correspondence is used to determine a BAP address of a target node corresponding to the FlAP message or the user plane data; and
the F1 interface is a communication interface between the first IAB-donor-CU and the DU of the IAB-node.

10. A communication method, comprising:
receiving, by a distributed unit DU of a second integrated access and backhaul IAB-donor (second IAB-donor-DU), an F1 application protocol FlAP message and a quality of service QoS attribute corresponding to the FlAP message from a central unit CU of a first integrated access and backhaul IAB-donor (first IAB-donor-CU); or receiving user plane data and a QoS attribute corresponding to the user plane data from a central unit CU of a first integrated access and backhaul IAB-donor (first IAB-donor-CU), wherein an F1 interface is a communication interface between the first IAB-donor-CU and a DU of an IAB-node; and
performing, by the second IAB-donor-DU, routing and bearer mapping on the FlAP message or the user plane data based on a route configuration and a bearer configuration that correspond to the QoS attribute.

11. The method according to claim 10, wherein the method comprises: receiving, from a second IAB-donor-CU by the second IAB-donor-DU, an internet protocol IP address allocated by the first IAB-donor to the IAB-node and a backhaul adaptation protocol BAP address allocated by the second IAB-donor to the IAB-node, wherein there is a correspondence between the IP address and the BAP address, and
determining, by the second IAB-donor-DU based on the correspondence, a BAP address of a target node corresponding to the FlAP message or the user plane data, wherein
the F1 interface is a communication interface between the first IAB-donor-CU and the DU of the IAB-node.

12. A communication method, comprising:
establishing, by an integrated access and backhaul IAB-node, a first transport network layer association TNLA between a central unit CU of a first IAB-donor and a distributed unit DU of the IAB-node by using an internet protocol IP address allocated by a second IAB-donor to the IAB-node; and
receiving, by the IAB-node through the first TNLA, an F1 application protocol F1AP message or user plane data from the first IAB-donor-CU, wherein an F1 interface is a communication interface between the first IAB-donor-CU and the DU of the IAB-node.

13. The method according to any one of claims 2 to 9, wherein the FlAP message type comprises a user equipment associated type and a non-user equipment associated type.

14. The method according to any one of claims 2 to 9 and 13, wherein the user plane data indication is a general packet radio service tunneling protocol for the user plane GTP-U tunnel identifier or an IP address of the F1 interface.

15. The method according to any one of claims 1 to 14, wherein the QoS attribute is a differentiated services code point DSCP and/or a flow label flow label.

16. The method according to any one of claims 1 to 15, wherein the FlAP message carries configuration information of the DU of the IAB-node under the first IAB-donor.

17. A handover method, comprising:
obtaining, by an integrated access and backhaul IAB-node, configuration information of a distributed unit DU of the IAB-node under a target IAB-donor; and
activating, by the IAB-node, the configuration information after a mobile terminal MT of the IAB-node is handed over from a source IAB-donor to the target IAB-donor.

18. The method according to claim 17, wherein the obtaining, by an IAB-node, configuration information of a distributed unit DU of the IAB-node under a target IAB-donor comprises:
receiving, by the IAB-node, the configuration information from the target IAB-donor.

19. The method according to claim 18, wherein the method further comprises:
receiving, by the IAB-node, second information from the target IAB-donor, wherein the second information is used to activate the configuration information; and
the activating, by the IAB-node, the configuration information comprises:
activating, by the IAB-node, the configuration information based on the second information.

20. The method according to claim 17, wherein the method further comprises:
receiving, by the IAB-node, at least one piece of configuration information from a network management device; and
the obtaining, by an IAB-node, configuration information of a DU of the IAB-node under a target IAB-donor comprises:
determining, by the IAB-node, the configuration information from the at least one piece of configuration information.

21. The method according to claim 20, wherein the method comprises:
sending, by the IAB-node to the target IAB-donor, request information used to establish an F1 interface, wherein the request information comprises the configuration information of the DU of the IAB-node under the target IAB-donor; and
receiving, by the IAB-node, response information of the request information from the target IAB-donor.

22. The method according to claim 21, wherein the method comprises:
establishing, by the IAB-node, a first transport network layer association TNLA between a target IAB-donor-CU and the DU of the IAB-node by using an IP address allocated by the target IAB-donor to the IAB-node;
the sending, by the IAB-node to the target IAB-donor, request information used to establish an F1 interface comprises:
sending, by the IAB-node to the target IAB-donor through the first TNLA, the request information used to establish the F1 interface; and
the receiving, by the IAB-node, response information of the request information from the target IAB-donor comprises:
receiving, by the IAB-node, the response information of the request information from the target IAB-donor through the first TNLA.

23. The method according to claim 21, wherein before the mobile terminal MT of the IAB-node is handed over from the source IAB-donor to the target IAB-donor, the method comprises:
establishing, by the IAB-node, a second transport network layer association TNLA between a target IAB-donor-CU and the DU of the IAB-node by using an IP address allocated by the source IAB-donor to the IAB-node;
the sending, by the IAB-node to the target IAB-donor, request information used to establish an F1 interface comprises:
sending, by the IAB-node to the target IAB-donor through the second TNLA, the request information used to establish the F1 interface; and
the receiving, by the IAB-node, response information of the request information from the target IAB-donor comprises:
receiving, by the IAB-node, the response information of the request information from the target IAB-donor through the second TNLA.

24. The method according to claim 21, wherein before the mobile terminal MT of the IAB-node is handed over from the source IAB-donor to the target IAB-donor, the method comprises:
establishing, by the IAB-node, a second transport network layer association TNLA between a target IAB-donor-CU and the DU of the IAB-node by using an IP address allocated by the source IAB-donor to the IAB-node;
the sending, by the IAB-node to the target IAB-donor, request information used to establish an F1 interface comprises:
sending, by the IAB-node to the target IAB-donor through the second TNLA, the request information used to establish the F 1 interface.

25. The method according to claim 24, wherein after the mobile terminal MT of the IAB-node is handed over from the source IAB-donor to the target IAB-donor, the method comprises:
establishing, by the IAB-node, a first TNLA between the target IAB-donor-CU and the DU of the IAB-node by using an IP address allocated by the target IAB-donor to the IAB-node; and
the receiving, by the IAB-node, response information of the request information from the target IAB-donor comprises:
receiving, by the IAB-node, the response information of the request information from the target IAB-donor through the first TNLA.

26. The method according to any one of claims 21 to 25, wherein the method comprises:
if the IAB-node receives the response information of the request information from the target IAB-donor before the mobile terminal MT of the IAB-node is handed over from the source IAB-donor to the target IAB-donor, the response information is used to deactivate the configuration information of the DU of the IAB-node under the target IAB-donor; or
if the IAB-node receives the response information of the request information from the target IAB-donor after the mobile terminal MT of the IAB-node is handed over from the source IAB-donor to the target IAB-donor, the response information is used to activate the configuration information of the DU of the IAB-node under the target IAB-donor.

27. The method according to claim 17, wherein the activating, by the IAB-node, the configuration information comprises:
automatically activating, by the IAB-node, the configuration information.

28. The method according to claim 27, wherein the method further comprises:
sending, by the IAB-node, first information to the target IAB-donor, wherein the first information indicates that the configuration information has been activated.

29. A handover method, comprising:
receiving, by a target integrated access and backhaul IAB-donor, first information from an IAB-node, wherein the first information indicates that configuration information of a distributed unit DU of the IAB-node under the target IAB-donor has been activated; and
determining, by the target IAB-donor based on the first information, that the configuration information has been activated.

30. A handover method, comprising:
receiving, from an IAB-node by a target integrated access and backhaul IAB-donor, request information used to establish an F1 interface; and
sending, by the target IAB-donor, response information to the IAB-node before a mobile terminal MT of the IAB-node is handed over from a source IAB-donor to the target IAB-donor, wherein the response information is used to deactivate configuration information of a DU of the IAB-node under the target IAB-donor; or
sending, by the target IAB-donor, response information to the IAB-node after a mobile terminal MT of the IAB-node is handed over from a source IAB-donor to the target IAB-donor, wherein the response information is used to activate configuration information of a DU of the IAB-node under the target IAB-donor.

31. The method according to claim 30, wherein
the receiving, from an IAB-node by a target IAB-donor, request information used to establish an F1 interface comprises:
receiving, from the IAB-node by the target IAB-donor through a second transport network layer association TNLA between a target IAB-donor-CU and the DU of the IAB-node, the request information used to establish the F1 interface, wherein the second TNLA corresponds to an internet protocol IP address allocated by the source IAB-donor to the IAB-node; and
the sending, by the target IAB-donor, response information of the request information to the IAB-node comprises:
sending, by the target IAB-donor, the response information of the request information to the IAB-node through the second TNLA.

32. The method according to claim 30, wherein
the receiving, from an IAB-node by a target IAB-donor, request information used to establish an F1 interface comprises:
receiving, from the IAB-node by the target IAB-donor through a first transport network layer association TNLA between a target IAB-donor-CU and the DU of the IAB-node, the request information used to establish the F1 interface, wherein the first TNLA corresponds to an internet protocol IP address allocated by the target IAB-donor to the IAB-node; and
the sending, by the target IAB-donor, response information of the request information to the IAB-node comprises:
sending, by the target IAB-donor, the response information of the request information to the IAB-node through the first TNLA.

33. The method according to claim 30, wherein
the receiving, from an IAB-node by a target IAB-donor, request information used to establish an F1 interface before a mobile terminal MT of the IAB-node is handed over from a source IAB-donor to the target IAB-donor comprises:
receiving, from the IAB-node by the target IAB-donor through a second transport network layer association TNLA between a target IAB-donor-CU and the DU of the IAB-node, the request information used to establish the F1 interface, wherein the second TNLA corresponds to an internet protocol IP address allocated by the source IAB-donor to the IAB-node.

34. The method according to claim 33, wherein
the sending, by the target IAB-donor, response information of the request information to the IAB-node after a mobile terminal MT of the IAB-node is handed over from a source IAB-donor to the target IAB-donor comprises:
sending, by the target IAB-donor, the response information of the request information to the IAB-node through a first TNLA between the target IAB-donor-CU and the DU of the IAB-node, wherein the first TNLA corresponds to an IP address allocated by the target IAB-donor to the IAB-node.

35. A communication apparatus, applied to a first integrated access and backhaul IAB-donor-central unit CU, comprising:
a processing module, configured to determine a quality of service QoS attribute corresponding to an F1 application protocol F1AP message or a quality of service QoS attribute corresponding to user plane data, wherein an F1 interface is a communication interface between the first IAB-donor-CU and a distributed unit DU of an IAB-node; and
a sending module, configured to send the FlAP message and the QoS attribute corresponding to the FlAP message to a second IAB-donor-DU, or send the user plane data and the QoS attribute corresponding to the user plane data to a second IAB-donor-DU.

36. The apparatus according to claim 35, wherein
the processing module is specifically configured to determine, based on a correspondence between an FlAP message type and the QoS attribute, the QoS attribute corresponding to the FlAP message; or
the processing module is specifically configured to determine, based on a correspondence between the user plane data and the QoS attribute, the QoS attribute corresponding to the user plane data, wherein
the correspondence is obtained by the first IAB-donor-CU from a second IAB-donor-CU.

37. The apparatus according to claim 35, wherein
the sending module is further configured to send an FlAP message type indication and the QoS attribute to a second IAB-donor-CU, wherein there is a correspondence between the FlAP message type indication and the QoS attribute; or
the sending module is further configured to send a user plane data indication and the QoS attribute to a second IAB-donor-CU, wherein there is a correspondence between the user plane data indication and the QoS attribute.

38. The apparatus according to any one of claims 35 to 37, wherein
the sending module is specifically configured to send the F1AP message or the user plane data to the IAB-node through a first transport network layer association TNLA between the first IAB-donor-CU and the DU of the IAB-node, wherein the first TNLA corresponds to an internet protocol IP address allocated by the first IAB-donor to the IAB-node; or
the sending module is specifically configured to send the F1AP message or the user plane data to the IAB-node through a second transport network layer association TNLA between the first IAB-donor-CU and the DU of the IAB-node, wherein the second TNLA corresponds to an internet protocol IP address allocated by the second IAB-donor to the IAB-node.

39. The apparatus according to claim 38, wherein
the obtaining module is further configured to receive, from the second IAB-donor-CU, the IP address allocated by the second IAB-donor to the IAB-node; and
the processing module uses the IP address allocated by the second IAB-donor to the IAB-node, so that the sending module sends the FlAP message or the user plane data to the IAB-node through the second TNLA.

40. A communication apparatus, applied to a second integrated access and backhaul IAB-donor-central unit CU, comprising:
a sending module, configured to send an F1 application protocol FlAP message type indication and a quality of service QoS attribute to a first IAB-donor-CU, wherein there is a correspondence between the FlAP message type indication and the QoS attribute, the correspondence is used to determine a QoS attribute corresponding to an FlAP message of the first IAB-donor-CU, and an F1 interface is a communication interface between the first IAB-donor-CU and a distributed unit DU of an IAB-node; or
a sending module, configured to send a user plane data indication and a QoS attribute to a first IAB-donor-CU, wherein there is a correspondence between the user plane data indication and the QoS attribute, and the correspondence is used to determine a QoS attribute corresponding to user plane data of the first IAB-donor-CU.

41. The apparatus according to claim 40, wherein
the sending module is further configured to send, to the first IAB-donor-CU, an IP address allocated by the second IAB-donor to the IAB-node, wherein the IP address is used to transmit the F1AP message or the user plane data.

42. A communication apparatus, applied to a second integrated access and backhaul IAB-donor-central unit CU, comprising:
an obtaining module, configured to receive an F1 application protocol FlAP message type indication and a quality of service QoS attribute from a first IAB-donor-CU, wherein there is a correspondence between the FlAP message type indication and the QoS attribute, and an F1 interface is a communication interface between the first IAB-donor-CU and a distributed unit DU of an IAB-node; or
an obtaining module, configured to receive a user plane data indication and a QoS attribute from a first IAB-donor-CU, wherein there is a correspondence between the user plane data indication and the QoS attribute; and
the apparatus further comprises:
a processing module, configured to enable, based on the correspondence, the sending module to send a route configuration and a bearer configuration that correspond to the QoS attribute to a second IAB-donor-DU.

43. The apparatus according to any one of claims 40 to 42, wherein
the sending module is further configured to send, to the second IAB-donor-DU, an internet protocol IP address allocated by the first IAB-donor to the IAB-node and a backhaul adaptation protocol BAP address allocated by the second IAB-donor to the IAB-node, wherein there is a correspondence between the IP address and the BAP address, and the correspondence is used to determine a BAP address of a target node corresponding to the FlAP message or the user plane data; and
the F1 interface is a communication interface between the first IAB-donor-CU and the DU of the IAB-node.

44. A communication apparatus, applied to a second integrated access and backhaul IAB-donor-distributed unit DU, comprising:
an obtaining module, configured to receive an F1 application protocol FlAP message and a quality of service QoS attribute corresponding to the F1AP message from a first IAB-donor-central unit CU; or receive user plane data and a QoS attribute corresponding to the user plane data from a first IAB-donor-central unit CU, wherein an F1 interface is a communication interface between the first IAB-donor-CU and a DU of an IAB-node; and
a processing module, configured to perform routing and bearer mapping on the FlAP message or the user plane data based on a route configuration and a bearer configuration that correspond to the QoS attribute.

45. The apparatus according to claim 44, wherein
the obtaining module is further configured to receive, from a second IAB-donor-CU, an internet protocol IP address allocated by the first IAB-donor to the IAB-node and a backhaul adaptation protocol BAP address allocated by the second IAB-donor to the IAB-node, wherein there is a correspondence between the IP address and the BAP address, and
the processing module is further configured to determine, based on the correspondence, a BAP address of a target node corresponding to the FlAP message or the user plane data, wherein
the F1 interface is a communication interface between the first IAB-donor-CU and the DU of the IAB-node.

46. A communication apparatus, applied to an integrated access and backhaul IAB-node, comprising:
a processing module, configured to establish a first transport network layer association TNLA between a first IAB-donor-central unit CU and a distributed unit DU of the IAB-node by using an internet protocol IP address allocated by a second integrated access and backhaul IAB-donor to the IAB-node; and
an obtaining module, configured to receive an F1 application protocol F1AP message or user plane data from the first IAB-donor-CU through the first TNLA, wherein an F1 interface is a communication interface between the first IAB-donor-CU and the DU of the IAB-node.

47. The apparatus according to any one of claims 36 to 43, wherein the FlAP message type comprises a user equipment associated type and a non-user equipment associated type.

48. The apparatus according to any one of claims 36 to 43 and 47, wherein the user plane data indication is a general packet radio service tunneling protocol for the user plane GTP-U tunnel identifier or an IP address of the F1 interface.

49. The apparatus according to any one of claims 35 to 48, wherein the QoS attribute is a differentiated services code point DSCP and/or a flow label flow label.

50. The apparatus according to any one of claims 33 to 46, wherein the FlAP message carries configuration information of the DU of the IAB-node under the first IAB-donor.

51. A communication apparatus, applied to an integrated access and backhaul IAB-node, comprising:
an obtaining module, configured to obtain configuration information of a distributed unit DU of the IAB-node under a target IAB-donor; and
a processing module, configured to activate the configuration information after a mobile terminal MT of the IAB-node is handed over from a source IAB-donor to the target IAB-donor.

52. The apparatus according to claim 51, wherein
the obtaining module is specifically configured to receive the configuration information from the target IAB-donor.

53. The apparatus according to claim 52, wherein
the obtaining module is further configured to receive second information from the target IAB-donor, wherein the second information is used to activate the configuration information; and
the processing module is specifically configured to activate the configuration information based on the second information.

54. The apparatus according to claim 51, wherein
the obtaining module is specifically configured to receive at least one piece of configuration information from a network management device; and
the processing module is further configured to enable the obtaining module to determine the configuration information from the at least one piece of configuration information.

55. The apparatus according to claim 54, wherein
a sending module is configured to send, to the target IAB-donor, request information used to establish an F1 interface, wherein the request information comprises the configuration information of the DU of the IAB-node under the target IAB-donor; and
the obtaining module is configured to receive response information of the request information from the target IAB-donor.

56. The apparatus according to claim 55, wherein the apparatus comprises:
the processing module, further configured to establish a first transport network layer association TNLA between a target IAB-donor-CU and the DU of the IAB-node by using an IP address allocated by the target IAB-donor to the IAB-node;
the sending module, specifically configured to send, to the target IAB-donor through the first TNLA, the request information used to establish the F1 interface; and
the obtaining module, specifically configured to receive the response information of the request information from the target IAB-donor through the first TNLA.

57. The apparatus according to claim 55, wherein before the mobile terminal MT of the IAB-node is handed over from the source IAB-donor to the target IAB-donor,
the processing module is further configured to establish a second transport network layer association TNLA between a target IAB-donor-CU and the DU of the IAB-node by using an IP address allocated by the source IAB-donor to the IAB-node;
the sending module is specifically configured to send, to the target IAB-donor through the second TNLA, the request information used to establish the F 1 interface; and
the obtaining module is specifically configured to receive the response information of the request information from the target IAB-donor through the second TNLA.

58. The apparatus according to claim 55, wherein before the mobile terminal MT of the IAB-node is handed over from the source IAB-donor to the target IAB-donor,
the processing module is further configured to establish a second transport network layer association TNLA between a target IAB-donor-CU and the DU of the IAB-node by using an IP address allocated by the source IAB-donor to the IAB-node; and
the sending module is specifically configured to send, to the target IAB-donor through the second TNLA, the request information used to establish the F1 interface.

59. The apparatus according to claim 58, wherein after the mobile terminal MT of the IAB-node is handed over from the source IAB-donor to the target IAB-donor,
the processing module is further configured to establish a first TNLA between the target IAB-donor-CU and the DU of the IAB-node by using an IP address allocated by the target IAB-donor to the IAB-node; and
the obtaining module is specifically configured to receive the response information of the request information from the target IAB-donor through the first TNLA.

60. The apparatus according to any one of claims 55 to 59, wherein
if the obtaining module receives the response information of the request information from the target IAB-donor before the mobile terminal MT of the IAB-node is handed over from the source IAB-donor to the target IAB-donor, the response information is used to deactivate the configuration information of the DU of the IAB-node under the target IAB-donor; or
if the obtaining module receives the response information of the request information from the target IAB-donor after the mobile terminal MT of the IAB-node is handed over from the source IAB-donor to the target IAB-donor, the response information is used to activate the configuration information of the DU of the IAB-node under the target IAB-donor.

61. The apparatus according to claim 51, wherein the processing module is specifically configured to automatically activate the configuration information.

62. The apparatus according to claim 61, wherein
a sending module is further configured to send first information to the target IAB-donor, wherein the first information indicates that the configuration information has been activated.

63. A communication apparatus, applied to a target integrated access and backhaul IAB-donor, comprising:
an obtaining module, configured to receive first information from an IAB-node, wherein the first information indicates that configuration information of a distributed unit DU of the IAB-node under the target IAB-donor has been activated; and
a processing module, configured to determine, based on the first information, that the configuration information has been activated.

64. A communication apparatus, applied to a target integrated access and backhaul IAB-donor, comprising:
an obtaining module, configured to receive, from an IAB-node, request information used to establish an F1 interface; and
a sending module, configured to send response information to the IAB-node before a mobile terminal MT of the IAB-node is handed over from a source IAB-donor to the target IAB-donor, wherein the response information is used to deactivate configuration information of a DU of the IAB-node under the target IAB-donor; or
a sending module, configured to send response information to the IAB-node after a mobile terminal MT of the IAB-node is handed over from a source IAB-donor to the target IAB-donor, wherein the response information is used to activate configuration information of a DU of the IAB-node under the target IAB-donor.

65. The apparatus according to claim 64, wherein
the obtaining module is specifically configured to receive, from the IAB-node through a second transport network layer association TNLA between a target IAB-donor-CU and the DU of the IAB-node, the request information used to establish the F 1 interface, wherein the second TNLA corresponds to an internet protocol IP address allocated by the source IAB-donor to the IAB-node; and
the sending module is specifically configured to send the response information of the request information to the IAB-node through the second TNLA.

66. The apparatus according to claim 64, wherein
the obtaining module is specifically configured to receive, from the IAB-node through a first transport network layer association TNLA between a target IAB-donor-CU and the DU of the IAB-node, the request information used to establish the F 1 interface, wherein the first TNLA corresponds to an internet protocol IP address allocated by the target IAB-donor to the IAB-node; and
the sending module is specifically configured to send the response information of the request information to the IAB-node through the first TNLA.

67. The apparatus according to claim 64, wherein
the obtaining module is specifically configured to: before the MT of the IAB-node is handed over from the source IAB-donor to the target IAB-donor, receive, from the IAB-node through a second transport network layer association TNLA between the target IAB-donor-CU and the DU of the IAB-node, the request information used to establish the F1 interface, wherein the second TNLA corresponds to an internet protocol IP address allocated by the source IAB - donor to the IAB-node.

68. The apparatus according to claim 67, wherein
the sending module is specifically configured to: after the MT of the IAB-node is handed over from the source IAB-donor to the target IAB-donor, send the response information of the request information to the IAB-node through a first TNLA between the target IAB-donor-CU and the DU of the IAB-node, wherein the first TNLA corresponds to an IP address allocated by the target IAB-donor to the IAB-node.

69. A communication apparatus, comprising at least one processor and an interface circuit, wherein a related computer program is executed in the at least one processor, so that the communication apparatus performs the method according to any one of claims 1 to 34.

70. A computer-readable storage medium, wherein the computer-readable storage medium stores a computer program or instructions, and when the computer program or the instructions is/are executed by a communication apparatus, the method according to any one of claims 1 to 34 is implemented.

71. A computer program product, wherein the computer program product comprises related program instructions, and when the related program instructions are executed, the method according to any one of claims 1 to 34 is implemented.

72. A communication system, comprising the communication apparatus according to any one of claims 35 to 43, the communication apparatus according to any one of claims 44 and 45, and the communication apparatus according to any one of claims 46 to 50; or comprising the communication apparatus according to any one of claims 51 to 62 and the communication apparatus according to any one of claims 63 to 68.
